# EUROPEAN PATENT SPECIFICATION

(11) **EP 3 149 603 B1**
(45) Date of publication and mention of the grant of the patent: **30.12.2020**
(21) Application number: 15800054.7
(22) Date of filing: 28.05.2015
(51) Int. Cl.: G06F 15/16, G06F 9/44, G06F 8/60, G06F 9/455

(54) **CUSTOMIZED CONFIGURATION OF CLOUD-BASED APPLICATIONS PRIOR TO DEPLOYMENT**
ANPASSBARE KONFIGURATION VON CLOUD-BASIERTEN ANWENDUNGEN VOR DEM EINSATZ
CONFIGURATION PERSONNALISÉE D'APPLICATIONS EN NUAGE AVANT UN DÉPLOIEMENT

(30) Priority: 30.05.2014 US 201414292296; 26.06.2014 US 201414315874
(43) Date of publication of application: 05.04.2017
(73) Proprietor: VMware, Inc., Palo Alto, CA 94304 (US)
(72) Inventor: SINHA, Rakesh, Palo Alto, California 94304 (US); NAGARAJA, Vishwas, Palo Alto, California 94304 (US); RACHAMADUGU, Raghavendra, Palo Alto, California 94304 (US); AGRAWAL, Nilesh, Sunnyvale, California 94086 (US)
(74) Representative: Appleyard Lees IP LLP
(86) International application number: PCT/US2015/033044
(87) International publication number: WO 2015/184179

(56) References cited:
- WO-A1-2012/033485
- WO-A1-2013/104217
- WO-A1-2013/184134
- US-A1- 2011 154 320
- US-A1- 2011 209 140
- US-A1- 2012 066 674
- US-A1- 2013 232 463
- US-A1- 2013 232 498
- US-A1- 2013 268 674

## Description

### Background

When deploying virtualized applications to one or more host computers in a cloud infrastructure, it is often required that certain customized configurations be performed, depending on the cloud provider of the infrastructure. Examples of different cloud providers include, but are not limited to, VMware vCloud® Automation Center, Amazon EC2®, and Microsoft® Azure. Since an infrastructure provider typically does not have knowledge of the actual applications deployed to it, it is usually left to an application designer to generate a deployment process that handles the required customized configuration. However, at the time an application is modeled, the designer does not possess complete knowledge of the target infrastructure. For instance, the deployment of certain network-based applications require internet protocol (IP) addresses of already-deployed server applications, or mount points for data storage devices on which infrastructure-specific configuration data may be stored. With a variety of different provider platforms, the problem of configuring and deploying applications for each platform has become a challenge for application designers.

A specific problem arises when IP addresses are allocated dynamically to virtual machines provisioned in a cloud infrastructure. Configuration of complex, multi-tiered applications often require IP addresses of provisioned virtual machines. For example, a load balancing application typically needs to connect to individual virtual machines deployed to a cloud at install/configuration time. Since the application designer does not know in advance what the IP addresses of the provisioned virtual machines are, just prior to application deployment, the IP addresses of the provisioned virtual machines need to be determined and the installation configuration data updated accordingly before installation of the load balancing application.

In addition, application deployment is currently performed using a simple queuing model. That is, deployment requests are often transmitted from a deployment platform to a cloud infrastructure without regard to whether certain previously transmitted tasks have completed. However, certain deployment tasks are dependent on the completion of previously transmitted tasks. In such cases, if task dependency is not enforced, then certain deployment tasks may be transmitted to a cloud infrastructure prematurely and, as a result, may fail. Therefore, a need has arisen to organize cloud application deployments in phases, where each phase consists of tasks that may be transmitted as a group, and where tasks in each phase may not begin until it is determined that all tasks of a preceding phase have completed executing.

WO2013/104217A1 describes a cloud infrastructure based management system comprising an application scheduling deployment engine, a deployment plug-in and a monitoring plug-in. The application scheduling deployment engine is used for performing application scheduling and deployment using a policy and the performance of an application instance or task processing state data of an application instance. WO2013/184134 describes a system including an application model to characterise a given application for deployment on a cloud. A deployment manager analyzes an application requirement for the given application based on the application model and policies associated therewith. US2013/232498A1 describes a deployment system which enables a developer to generate a deployment plan according to a logical, multi-tier application blueprint defined by application architects. US2013/268674A1 describes a method of selectively allocating a plurality of deployment units among a plurality of clouds. US 2013/0232463 A1 describes a system and method for customizing a deployment plan for a multi-tier application in a cloud infrastructure. A deployment system enables a developer to customize a deployment plan generated according to a logical, multi-tier application blueprint for deploying multiple applications in a cloud infrastructure.

### Summary

According to the present invention there is provided a method as set forth in claim 1. Also there is provided a medium as in claim 8 and a system as in claim 9. Additional features of the invention will be appreciated from the dependent claims and the discussion herein.

### Brief Description of the Drawings

Fig. 1 is a block diagram that depicts a virtualized cloud-based computing environment in which one or more embodiments may be implemented.
Fig. 2A is a block diagram that illustrates a user interface that displays deployment phases for deploying an application to a first target cloud infrastructure, according to embodiments.
Fig. 2B is a block diagram that illustrates a user interface that displays deployment phases for deploying an application to a second target cloud infrastructure, according to embodiments.
Fig. 3A is a block diagram that depicts a user interface that displays a deprovisioning phase for deprovisioning a cloud-based application from a first target infrastructure, according to embodiments.
Fig. 3B is a block diagram that depicts a user interface that displays deprovisioning and cleanup phases for deprovisioning a cloud-based application from a second target infrastructure, according to embodiments.
Fig. 4 is a flow diagram that depicts a method for determining and transmitting deployment tasks to deploy a cloud-based application, according to one or more embodiments.
Fig. 5 is a flow diagram that depicts a method of transmitting deployment requests in phases to a cloud management server, according to one or more embodiments.
Fig. 6 is a conceptual diagram that illustrates, according to one or more embodiments, a process for discovering a dynamically allocated IP address for a virtual machine instantiated in a cloud infrastructure.
Fig. 7 is a flow diagram that illustrates a method for discovering and communicating to a deployment platform IP addresses of virtual machines provisioned in a cloud-based infrastructure, according to embodiments.
Fig. 8 depicts one embodiment of a system for deploying an application on multiple cloud computing environments.
Fig. 9 is a flow diagram of an exemplary deployment method performed by application director to deploy an application in a deployment environment provided by cloud computing platform provider.
Fig. 10 is a flow diagram that illustrates a method for determining compliance of a deployment plan to one or more policies, according to one embodiment of the present disclosure.
Fig. 11 is a block diagram depicting a deployment object used to manage one or more policies, according to an embodiment.

### Detailed Description

### CUSTOMIZED CONFIGURATION OF CLOUD-BASED APPLICATIONS PRIOR TO DEPLOYMENT

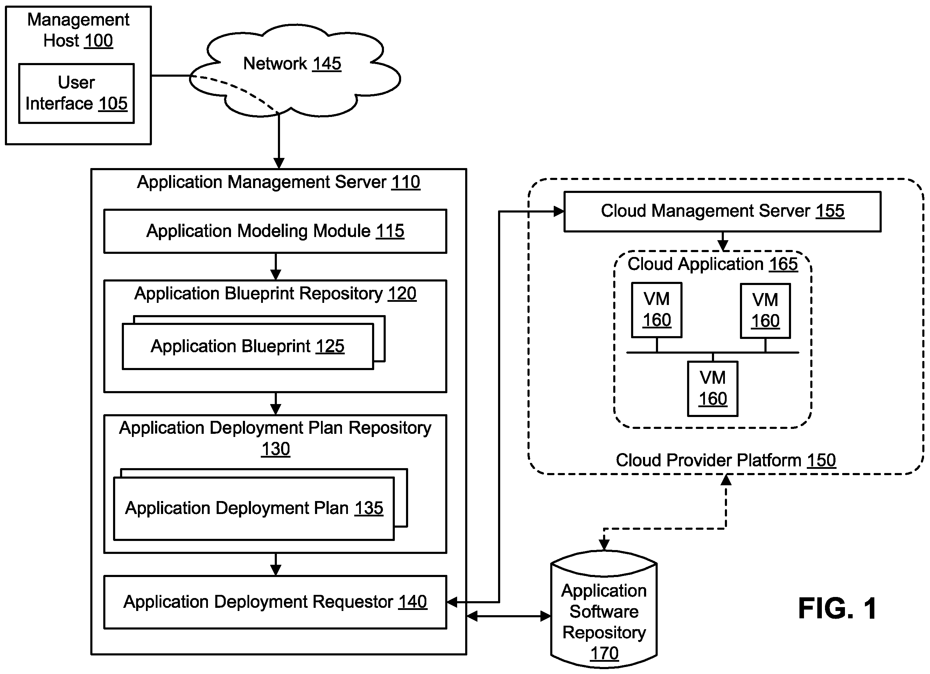

Fig. 1 is a block diagram that depicts a virtualized cloud-based computing environment in which one or more embodiments may be implemented. The components of the depicted cloud-based computing environment include, but are not limited to, an application management server 110, a cloud provider platform 150, an application software repository 170, a computer network 145 and a management host 100.

Application management server 110 is an application provisioning platform that enables the creation of application configurations and topologies and provides for the deployment of applications to multiple cloud infrastructure platforms. In embodiments, an application designer accesses application management server 110 using a workstation in order to model a cloud-based application. In a virtualized environment, application modeling includes the selection of various application and system software modules, the selection of one or more virtual machines in which the software modules are to execute, and the selection of various virtual infrastructure devices (such as virtual network switches and virtual data storage devices) that the virtual machines access while executing. Examples of system software include guest operating systems of the virtual machines, web server software, as well as network device drivers and other low-level software that typically runs at the kernel level. Application software includes user-defined applications, pre-packaged vendor software, and database software. Application modeling also includes the creation of an application topology, which specifies how the various components of an application (i.e., the virtual machines and the software executing therein) are situated within the application in relation to each other, and how the components communicate with each other.

Further, once an application is modeled, an application designer typically creates a plan (often an automated, software-based plan) to deploy the various application components to a cloud-computing infrastructure. Once the application components are deployed, they execute in a holistic fashion as a unified cloud-based application. That is to say, the deployed components (e.g., virtual machines and the like) each execute software modules and communicate with one another in order to perform the various functions of the deployed application. One example of application management server 110 is vCloud® Application Director, which is commercially available from VMware, Inc. of Palo Alto, California.

Once an application designer completes modeling a desired application, the application model may be saved, in embodiments, as an application blueprint. An application blueprint may be thought of as defining the structure of a virtualized cloud-based application. Referring to the embodiment shown in Fig. 1, an application designer uses management host 100 in order to direct application management server 110 to generate application models. Management host 100 is, typically, a computer workstation or laptop computer with a keyboard, pointing device (e.g. mouse, trackball, or trackpad), and display. As shown in Fig. 1, management host 100 includes user interface 105. In embodiments, user interface 105 is a graphical user interface (GUI) that provides a graphical "canvas" that enables an application designer to model application topologies and generate application blueprints. In one or more embodiments, user interface 105 is configured with software that enables a designer to generate application blueprints by employing a drag-and-drop interaction. Using such an interaction, the designer may select application components (both software modules and virtualized hardware devices) from available "catalogs", and arrange the components in any number of ways to define the structure of the application.

As shown in the embodiment of Fig. 1, management host 100 accesses application management server 110 over network 145. Network 145 may be, in embodiments, a local area network, a campus area network, a metropolitan area network, or wide area network (such as the Internet). Management host 100 may also connect directly to application management server 110 over a serial or parallel port. Embodiments of management host 100 and application management server 110 communicate using any of a number of well-known data communication protocols, such as Ethernet and TCP/IP, as well as proprietary protocols.

Application management server 110 comprises a number of modules that enable the creation and deployment of virtualized cloud-based applications. In Fig. 1, application management server 110 includes application modeling module 115. Application modeling module 115 is accessed by an application designer using user interface 105 on management host 100. Under the direction of an application designer, application modeling module 115 selects the various software and virtual hardware components of an application from one or more catalogs (not shown), and arranges these components in a manner that defines the structure of an application. For example, an application designer may wish to define a "multi-tiered" virtualized cloud-based application. That is, the application comprises multiple software components that execute within multiple virtual machines.

As an example, an application designer may direct application modeling module 115 to model a cloud-based application comprising a database server, several application servers, and a load-balancing server. Each of the aforementioned servers may execute in a separate virtual machine. Each virtual machine communicates with the other virtual machines in order to execute the overall application. Thus, once such an application is deployed to a cloud infrastructure, an end user may access one application server (e.g., a user interface/security server) in order initiate an application request. The user interface/security server then, for example, accesses a "business logic" server in order to evaluate the request, which then accesses a database server to obtain data to satisfy the request, and so on. The load-balancing server evaluates the workloads of each of the virtual machines in which the application components execute and, when it finds a particular virtual machine to be overburdened, migrates an application component from the overburdened virtual machine to a virtual machine with spare processing capacity.

Once the application designer completes modeling a cloud-based application, the designer instructs application modeling module 115 to generate an application blueprint 125 based on the application just modeled. As mentioned above, the application blueprint 125 specifies the structure of a cloud-based application (e.g., the software and virtual hardware components, and the interrelationships of these components). In embodiments, application blueprint 125 comprises one or more files or data structures that fully describe the structure of a virtualized cloud-based application. When application modeling module 115 generates application blueprints 125, the blueprints are stored in application blueprint repository 120. In embodiments, application blueprint repository is a relational or hierarchical database within application management server 110. In other embodiments, application blueprint repository 120 is stored on a data storage device external to, but accessible by, application management server 110.

Once application blueprints are generated, there remains the task of deploying the application represented by the application blueprints to one or more cloud infrastructures. In order to deploy a virtualized cloud-based application, embodiments of application management server 110 include a module to generate an application deployment plan 135 for the application. Application management server 110 generates application deployment plans at the request of an application designer using management host 100. Management host 100 communicates with application modeling module 115 in order to generate deployment plans. In other embodiments, management host 100 directs other components of application management server 110 (not shown), which are dedicated to the task of generating application deployment plans.

Referring to Fig. 1, application deployment plans 135 are each generated based on a corresponding application blueprint 125. Each application deployment plan 135 specifies the various tasks that must be performed in order to carry out the deployment of the application described by the corresponding application blueprint 135. As shown in the figure, application deployment plan 135 is stored in application deployment plan repository. Application deployment plan repository 130, as was the case for application blueprint repository 120, may be a relational or hierarchical database (or any internal data structure) within application management server 110. Alternatively, application deployment plan repository 130 may comprise one or more files, or a database, stored in a data storage device that is external to, but accessible by, application management server 110.

In typical embodiments, application deployment plans 135 comprise groupings of deployment tasks that are referred to as deployment "phases." Deployment phases usually comprise tasks that are grouped together that can usually be performed in parallel. In one or more embodiments, a first phase of a deployment is referred to as a "bootstrap" phase. In a bootstrap phase, virtual machines that comprise the virtualized cloud-based application are provisioned (i.e., instantiated) in the cloud infrastructure. The virtual machines that are instantiated during the bootstrap phase can often be instantiated in parallel with each other, provided that the cloud-based software (described below) that instantiates the virtual machines is capable of multi-threaded execution.

Aside from logically grouping potentially parallel deployment tasks together, deployment phases may also be used to define logical stopping points of a deployment. That is, there are certain tasks in a deployment that may only be performed once all tasks in a prior phase have completed. As a simple example, a single virtual machine application is to be deployed to a cloud infrastructure. The designer of the application directs application management server 110 to generate an application deployment plan 135 for the application, where the deployment plan consists of two phases: a bootstrap phase and a user application phase (referred to herein as an "exec" phase). The virtual machine is provisioned during the bootstrap phase. That is, the necessary tasks in order to instantiate a virtual machine in the cloud infrastructure are performed during the bootstrap phase. On the other hand, during the user application phase, application and system software is installed on the virtual machine provisioned in the bootstrap phase. In some embodiments, all bootstrap phase tasks must complete prior to commencing any tasks in the user application phase.

Further, application deployment plans 135 provide for the specification of task dependencies. That is, an application designer may specify that certain deployment tasks may only be executed after certain other deployment tasks have completed. For example, a designer may wish to deploy two application servers and a load-balancing server. It is often the case that load-balancing servers, at install time, need to find and "register" the identities and addresses of other servers that are to be load-balanced. Hence, it makes little sense to deploy the load-balancing server before the application servers are deployed. Using application management server 110, application designers may build task dependencies into an application deployment plan in order to ensure that certain virtual machines are deployed prior to other virtual machines, or that certain software packages are installed before other software packages.

Referring back to Fig. 1, application management server 110 also includes application deployment requestor 140. In one or more embodiments, application deployment requestor 140 is a software module that communicates with a variety of target cloud infrastructures in order to conduct the deployment of a virtualized cloud-based application. Application deployment requestor 140 accesses application deployment plans 135, and transmits deployment requests to a cloud infrastructure according to the deployment plan. For example, in the simple example outlined above, a sample application deployment plan specifies that, in a first phase, a virtual machine is to be provisioned in a cloud infrastructure. Further, in a second phase, application and system software is installed on the virtual machine. Thus, according to embodiments, application deployment requestor receives a request from a designer to deploy the application corresponding to the aforementioned plan. Application deployment requestor 140 then initiates a first deployment phase by transmitting a first request to provision the virtual machine in the cloud infrastructure. This request is transmitted to a server process that runs in the cloud, which is configured to, among other things, instantiate virtual machines in the cloud. Application deployment requestor 140 monitors the instantiation process and, once the virtual machine is instantiated, application deployment requestor 140 initiates the next phase, namely, the installation of software on the deployed virtual machine. In order to facilitate the installation of software on the virtual machine, embodiments of application deployment requestor 140 are configured to transmit location information to the virtual machine so that an agent running therein (described below) can access and download required software packages. Application deployment requestor 140 is also configured to initiate and monitor the completion of deployment phases. As mentioned earlier, a deployment phase is a set of deployment tasks that are grouped together, each of which must complete before a subsequent deployment phase may be started.

As shown in Fig. 1, application management server (via application deployment requestor 140) communicates with a cloud infrastructure. The cloud infrastructure of Fig. 1 is referred to as cloud provider platform 150. Examples of cloud provider platform 150 include, but are not limited to, Microsoft Azure, Amazon Elastic Compute Cloud (EC2), and VMware's vCloud® Automation Center™. Typically, cloud provider platform 150 includes a server module, referred to herein as cloud management server 155. Cloud management server 155 is generally configured to manage cloud computing resources. For example, cloud computing infrastructures typically include scores of host computers (usually server-class computers), and several storage area networks with pluralities of storage devices connected thereto. Further, cloud computing infrastructures include computer networking hardware to enable data communication among the various hosts, storage units, and other components that make up the cloud infrastructure. Embodiments of cloud management server 155 are configured to monitor and manage these resources. Further, cloud management server 155 is typically accessed by a cloud administrator (i.e., a system administrator) from a system console device (not shown).

Among the tasks that cloud management server 155 performs is the instantiation of virtual machines in the cloud infrastructure. That is, cloud management server 155 is configured to receive requests from external sources and, in response to the requests, provision one or more virtual machines on one or more computer hosts in the cloud. Virtual machines that are instantiated by cloud management server 155 are software emulations of physical computing devices. When embodiments of cloud management server 155 instantiate a virtual machine, the virtual machine is provisioned with "bootstrap agent" software. Bootstrap agent software enables the virtual machine to be started (i.e., "booted up"), and then to access and install additional software modules (e.g., guest operating system software). Once the bootstrap agent software downloads and installs a guest operating system (and performs basic configuration tasks), the virtual machine is said to be provisioned (or instantiated) in the cloud. Among the configuration that is often required for a virtual machine is the assignment of a network address to a virtual network adapter or network interface card (i.e., a "NIC") configured therein. The addresses that a virtual network adapter is assigned include a media access control (MAC) address and an IP address. Once MAC and IP addresses are assigned to the NIC (or NICs) of a virtual machine, then those NICs may be addressed by devices external to the virtual machine.

As shown in Fig. 1, cloud management server 155 receives requests from application deployment module 140. In the embodiment shown, application deployment requestor 140 communicates directly with cloud management server 155, although such communication may occur over a local area network, wide area network, wireless network, and the like. The requests that application deployment requestor 140 transmits to cloud management server 155 correspond to deployment tasks in application deployment plan 135. The requests include requests to instantiate one or more virtual machines in the cloud infrastructure and to install software on the instantiated virtual machines. In the embodiment of Fig. 1, cloud management server 155 has instantiated three virtual machines (VMs 160) in response to one or more requests from application deployment requestor 140.

In embodiments, once virtual machines are instantiated in the cloud infrastructure, application deployment requestor 140 transmits to each instantiated virtual machine a deployment agent (not shown). Deployment agents are programs that are callable by cloud management server 155, and which the virtual machines execute in order to download software packages after the virtual machines are instantiated.

In order to install computer software on the virtual machines, cloud management server 155 invokes the deployment agents installed within VMs 160, at the request of application deployment requestor 140. In some embodiments, the deployment agents of VMs 160 communicate back through cloud management server 155 to application deployment requestor 140 to request transmission of computer software packages that are to be installed on VMs 160. In such embodiments, application management server 110 accesses a repository of computer software (such as application software repository 170), reads the requested software packages (e.g., JAR files, WAR files, DMG files, or EXE installation packages), and transmits these to cloud management server 155 for deployment to and execution on VMs 160. Alternatively, in other embodiments, another process running on cloud provider platform 150 (or the VMs 160 themselves) directly access application software repository 170 in order to obtain the required software packages. It should be noted that throughout the process of virtual machine instantiation and software installation, application management server (through application deployment requestor 140) monitors progress of the overall application deployment.

When a virtualized cloud-based application is deployed to a cloud infrastructure, it is frequently the case that certain application components require the availability of certain system-oriented data before they can be properly configured. For example, an application that accesses a database at runtime may be installed by an installation script, where the installation script goes out and accesses the database during installation in order to ensure that the database is available and that the application has access to the database. Another example is the case of a load-balancing server. As mentioned earlier, at the time of their installation, load balancing servers typically find and register virtual machines that are to be load-balanced. Thus, the installation script of the load balancing server typically needs to know the addresses of other virtual machines in order to register those virtual machines. In still another example, an application may require that a specific network drive be mounted during installation.

Further, whether or not certain system-oriented data that is required by the application component is available is often dependent upon the target cloud infrastructure in which the application is to be deployed. For example, it may be the case that certain cloud infrastructure platforms provide IP addresses for all virtual machines deployed therein at the time the virtual machines are instantiated. However, other cloud infrastructure platforms do not provide these IP addresses. This is especially true in cloud-based computing environment that implement a Dynamic Host Control Program protocol scheme, which provides for dynamic allocation and assignment of IP addresses to virtual and physical devices configured therein. Because installation of some application (e.g., load balancers) requires the IP addresses of virtual machines deployed to the cloud, there is a need to provide those addresses to the installation process before starting the installation.

Thus, for those cloud infrastructure platforms that do not readily make available dynamically assigned IP addresses at instantiation time, it is advantageous to execute tasks to discover and provide dynamically assigned IP addresses to installation processes that require them. These tasks are executed after the so-called "bootstrap" phase (i.e., the deployment phase during which virtual machines are instantiated in the cloud) and before the so-called "exec" phase (i.e., a deployment phase during which system and application software is installed on the virtual machines according to an application deployment plan). Such tasks are referred to herein as being part of a "pre-exec" deployment phase. However, it should also be noted that executing the aforementioned tasks of the pre-exec deployment phase is not required for deployment on all cloud infrastructure platforms. For example, as previously mentioned, some cloud infrastructure platforms provide IP addresses for all virtual machines at the time of instantiation of the virtual machines. Thus, for those platforms, it is unnecessary to execute tasks to discover already known IP addresses. What is needed is a mechanism to dynamically inject the pre-exec deployment phase tasks into a deployment plan based on the type of target cloud infrastructure.

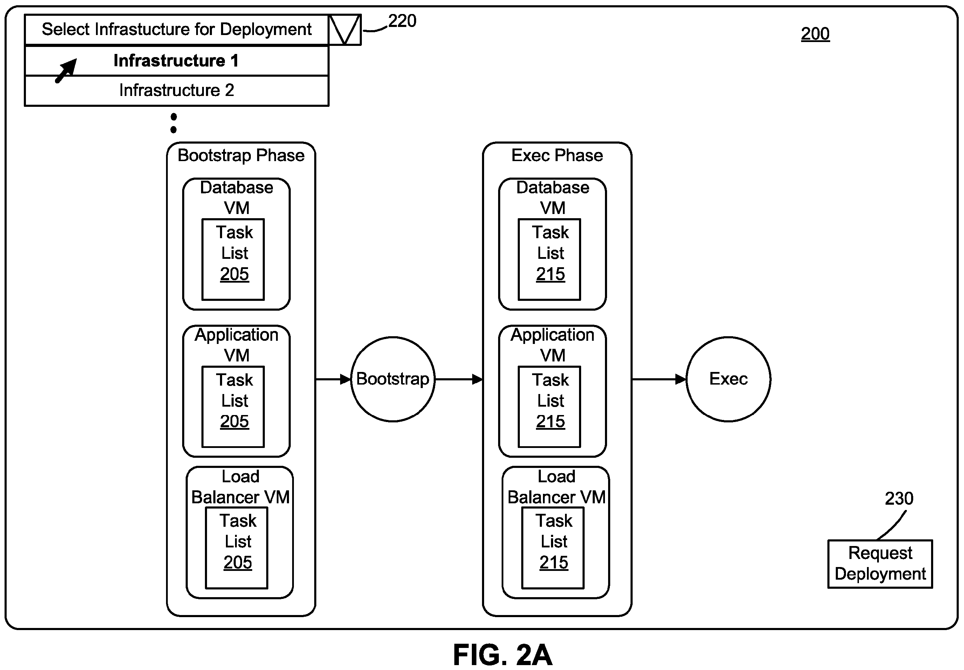

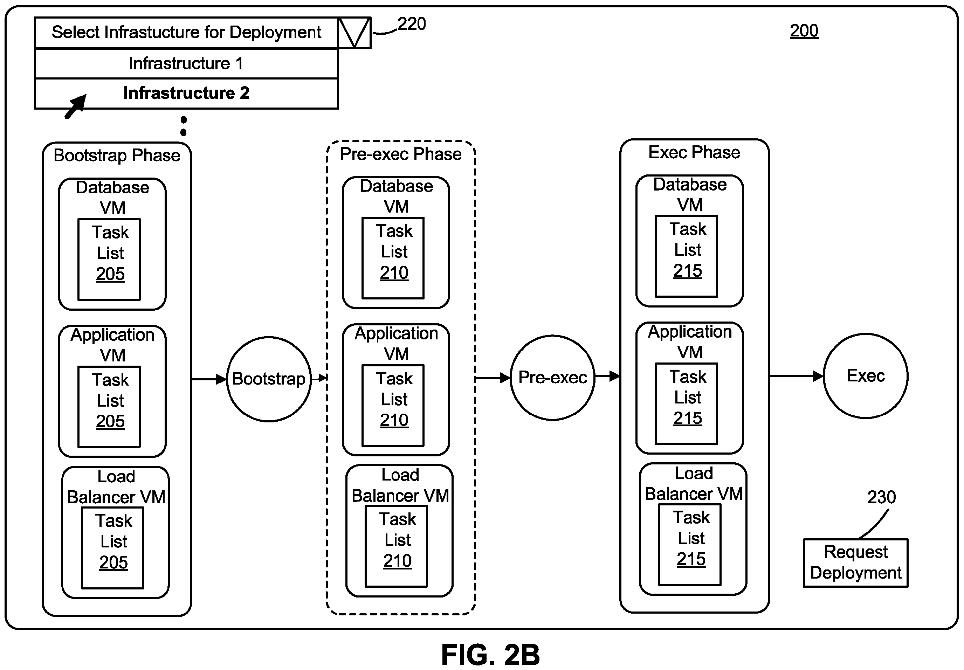

Figs. 2A and 2B depict a sample user interface 200 that interacts with application management server 110 in order to generate an application deployment plan and to request deployment of the corresponding application, where a new "pre-exec" phase is injected into the deployment plan based on a selection of a target cloud infrastructure for deployment.

Fig. 2A depicts deployment phases in user interface 200, where the target cloud infrastructure does not require the execution thereon of any "pre-exec" phase tasks. Fig. 2A illustrates bootstrap and exec deployment phases for the deployment of a multi-tiered virtualized cloud-based application. The application is comprised of three virtual machines: a database virtual machine, an application virtual, and a load balancer virtual machine. All three virtual machines, after being deployment in a cloud infrastructure, are configured to execute in a coordinated fashion a cloud-based application.

As shown in Fig. 2A, the first deployment phase is a bootstrap phase. As previously mentioned, virtual machines are provisioned and instantiated in the cloud during the bootstrap phase. As shown in Fig. 2A, the provisioning of each virtual machine comprises the execution of tasks from task list 205. Task list 205 includes, for example, a task for instructing a cloud management server (such as cloud management server 155 in Fig. 1) to instantiate the software structures in the cloud infrastructure for the corresponding virtual machine. A second task included in task list 205 transmits and installs a deployment agent software module on each of the virtual machines. As mentioned above, in embodiments, the deployment agent issues requests for software packages, receives the software packages, and invokes the installation program (or script) of each package, which results in the installation of the required software on the virtual machine. It should be noted that the tasks in task list 205 need not be identical for each virtual machine. That is, certain virtual machines may require the execution of certain tasks that are not required by other virtual machines. However, what all tasks in the task lists 205 share in common is that all such tasks are transmitted and executed in the same deployment phase (i.e., the bootstrap phase). Once all tasks in task list 205 complete for each virtual machine during the bootstrap phase, then the bootstrap phase is complete.

Fig. 2A also depicts a "join point" after the bootstrap phase, which is labeled "bootstrap" in Fig. 2A. Join points represent discrete points in time for a particular application deployment and appear, specifically, between phases of the deployment. For example, join point "bootstrap" immediately follows the bootstrap phase and also immediately precedes the subsequent "exec" phase. Each join point represents a point in time that application management server (in executing the deployment process) stops and assesses whether all tasks of an immediately preceding phase have completed. Thus, join point "bootstrap" is a point in time of the deployment of the multi-tiered application comprising database, application, and load balancing virtual machines where application management server 110 determines whether all tasks in the immediately preceding deployment phase (i.e. the bootstrap phase) have completed.

For example, assuming that each of tasks lists 205 comprise tasks for provisioning the corresponding virtual machine to a cloud infrastructure and for distributing a deployment agent to the virtual machine, application management server 110 determines, at the bootstrap join point, that the bootstrap phase is complete once both of the aforementioned tasks have completed on each of the virtual machines being deployed. At that point, application management server 110 determines that the deployment of the multi-tiered application may proceed to the next phase (i.e., the "exec" phase). If, however, application management server 110 determines, at the bootstrap join point, that any of the tasks in the bootstrap phase have not completed (or have failed) then the deployment of the multi-tiered application is halted until the tasks complete, or until a system administrator takes corrective action.

Fig. 2A also depicts a representation in user interface 200 of the exec deployment phase. In one or more embodiments, the exec deployment phase comprises tasks that install, configure, and start applications in each of the target virtual machines deployed in the prior bootstrap phase. For example, as shown in Fig. 2A, during the exec phase, a database application is installed, configured, and started on the database virtual machine, via install, config, and start tasks in task list 215. Further, the application virtual machine has installed therein a user-defined application through the execution of corresponding tasks in task list 215 for the application virtual machine. Finally, the load balancer virtual machine has load balancing server software installed therein by the execution of corresponding tasks in task list 215 for the load balancer virtual machine. It should be noted that, in embodiments, the execution of the tasks in task lists 215 for each of the virtual machines depicted in the exec phase of Fig. 2A includes: (1) application deployment requestor 140 transmitting a request to cloud management server 155; (2) cloud management server 155 invoking a deployment agent on a corresponding VM 160; (3) the deployment agent requesting required software from application management server 110; (4) the deployment agent receiving the required software installation package from application management server 110. It should be noted that the aforementioned process is only one example, and that other combinations of steps that, when carried out, achieve the installation of software within the virtual machines are contemplated and are within the scope of the present invention.

In addition, Fig. 2A includes a second join point, which is labeled "exec" in the figure, and which depicts a second stopping point in the deployment of the multi-tiered application. As was the case for the bootstrap join point, application management server 110 determines, at the exec join point, whether all tasks in all task lists 215 in the exec phase have completed for all virtual machines being deployed. If application management server 110 determines that all tasks have not completed, then the deployment of the multi-tiered application is halted until such time that all tasks in the task lists 215 have completed, or until a system administrator takes corrective action. On the other hand, if application management server 110 determines, at the exec join point, that all tasks in task lists 215 have completed, then the deployment of the multi-tiered application finishes, or, alternatively, may proceed to a next phase (not shown).

In addition, the embodiment of user interface 200 depicted in Fig. 2A shows pulldown menu 220. Pulldown menu 220 is a GUI element that, when expanded, displays a list of target infrastructure environments for deployment of the multi-tiered application. For example, in an embodiment, pulldown menu 220 includes list entries for vCloud Automation Center, Amazon EC2, and Microsoft Azure. As previously mentioned, depending upon a target cloud infrastructure, one or more tasks may need to be executed in a "pre-exec" phase that is situated in the deployment between the bootstrap and exec phases. Embodiments of user interface 200 are configured to detect a selection of a target cloud infrastructure for deployment and, depending on the selected target cloud infrastructure, inject into the deployment one or more tasks in a pre-exec phase.

In the embodiment depicted in Fig. 2A, an end user selects "Infrastructure 1" from pulldown menu 220. According to the depicted embodiment, Infrastructure 1 is determined as not requiring the execution of any pre-exec phase tasks. Therefore, when Infrastructure 1 is selected from pulldown menu 220, no additional pre-exec phase tasks are included in the deployment shown.

Finally, in the embodiment depicted in Fig. 2A, user interface 200 includes a button 230 for requesting the deployment of the displayed deployment plan. That is, when button 230 is selected by an end user, application management server 110 generates and transmits deployment requests to cloud management server 155.

Fig. 2B depicts user interface 200 from Fig. 2A following the selection of a different target cloud infrastructure (Infrastructure 2) from pulldown menu 220, where Infrastructure 2 is determined (by application management server 110) to require the execution (in the cloud infrastructure) of pre-exec phase tasks after the bootstrap phase and before the exec phase.

In the embodiment of Fig. 2B, once Infrastructure 2 is selected from pulldown menu 220, user interface 200 depicts the injection (by application management server 110) of a new pre-exec phase into the overall deployment. As shown, the pre-exec phase is inserted into the deployment after the bootstrap join point and before the exec phase. Further, a new pre-exec join point is inserted after the pre-exec phase. It should be noted that the selection of Infrastructure 2 from pulldown menu 220 triggers, in embodiments, the display of a potential change to the application deployment plan. That is, any change to the actual corresponding application deployment plan 135 in application deployment plan repository 130 is made by application management server 110. In some embodiments, user interface 200 includes a Save button to request that application management server 110 replace the stored application deployment plan with the displayed application deployment plan.

The pre-exec deployment phase depicts, for each virtual machine in the multi-tiered application, a new task list 210. In embodiments, task lists 210 include infrastructure-specific network setup tasks. Such network setup tasks may implement a process whereby each virtual machine executes a program to determine its own (or any other) dynamically assigned IP address. However, such a network setup task is only one example of tasks that may execute in the pre-exec phase. The pre-exec phase may comprise any task executable by any combination of the deployed virtual machines.

In addition, the pre-exec join point is shown immediately following the newly added pre-exec phase. The pre-exec join point represents another stopping point in the application deployment process, where application management server 110 determines whether all tasks in task lists 210 in the pre-exec phase (e.g., the network setup tasks for each of the virtual machines being deployed) have completed. As is the case with the join points previously described, if application management server 110 determines, at the pre-exec join point that at least one of the tasks in task lists 210 in the pre-exec phase has not completed, then the deployment of the multi-tiered application is halted. If, however, application management server 110 determines, at the pre-exec join point that all tasks 210 in the pre-exec phase have completed, then the deployment of the multi-tiered application proceeds to the subsequent phase (i.e., the exec phase, as shown in Fig. 2B).

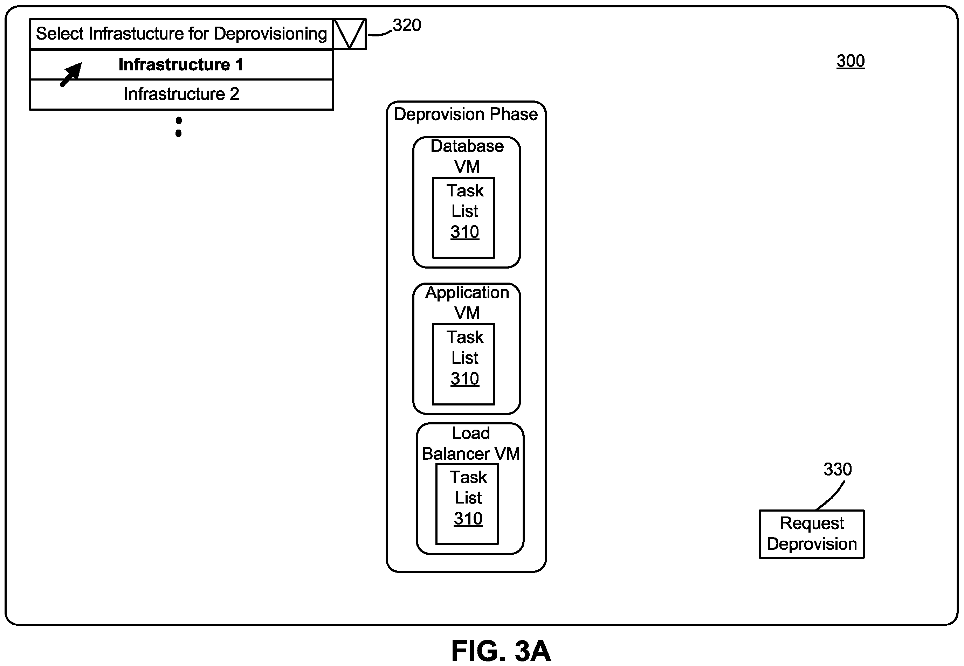

The insertion of additional infrastructure-dependent tasks is not limited to the deployment of virtualized cloud-based applications. Embodiments of application management server 110 are also configured to deprovision and deallocate deployed cloud-based applications. Deprovisioning an application typically involves completing any application requests currently in execution, quiescing any running application tasks, and then deallocating cloud resources from the quiesced application. User interface 300 in Fig. 3A depicts a sample user interface that displays an application deprovisioning plan. As shown, user interface 300 includes a representation of a deprovision phase. The deprovision phase comprises task lists 310 that are executed for each virtual machine in order to deallocate cloud-based applications from a selected cloud infrastructure. For example, in the embodiment of Fig. 3A, each of the virtual machines (database, application, and load balancer) executes two tasks: a first task to quiesce the application executing therein, and a second task to uninstall the virtual machine. In typical embodiments, a quiesce task is a custom task for each application component, which cleanly halts the operation of that component. For example, with respect to the database application executing in the database virtual machine, a quiesce task would ensure that any updates made to an external persistent storage device are completed in order to preserve data integrity.

An uninstall task is usually performed by cloud management server 155 for each virtual machine to be deallocated from the cloud infrastructure. An uninstall task frees up system memory and other cloud resources that are typically found in any cloud infrastructure platform. However, there are instances where certain cloud infrastructure platforms might require certain infrastructure-specific tasks to be executed once an application has been deprovisioned. For example, certain cloud infrastructure platforms have specialized components, such as data structures that store statistical or performance data that is to be found on only that particular platform. Thus, in order to "cleanse" a particular infrastructure platform after deprovisioning, it is often necessary to execute one or more infrastructure-specific tasks.

In addition, the embodiment of user interface 300 depicted in Fig. 3A shows pulldown menu 320. As was described with respect to pulldown menu 220 of Figs. 2A and 2B, pulldown menu 320 is a GUI element that, when expanded, displays a list of target infrastructure environments. With respect to Fig. 3A, these target environments specify cloud infrastructure platforms from which a cloud-based application is to be deprovisioned. Embodiments of user interface 300 are configured to detect a selection of a target cloud infrastructure for deprovisioning and, depending on the selected target cloud infrastructure, inject into the deprovisioning operation one or more tasks in a "cleanup" phase.

As shown in Fig. 3A, an end user selects "Infrastructure 1" from pulldown menu 220. According to the depicted embodiment, Infrastructure 1 is determined as not requiring the execution of any tasks in a cleanup phase. Therefore, when Infrastructure 1 is selected from pulldown menu 220, no additional cleanup phase is included in the deployment shown.

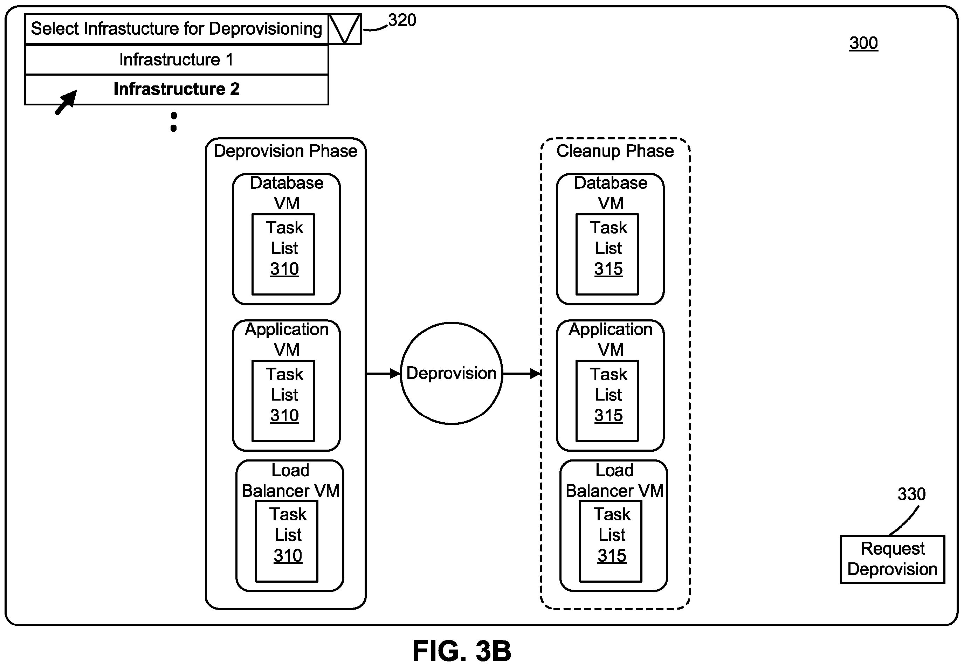

Fig. 3B depicts user interface 300 following the selection from pulldown menu 320 of a different target infrastructure (Infrastructure 2) from which a multi-tiered cloud-based application is to be deprovisioned. As was described with respect to Fig. 2B, in one or more embodiments, the selection of a specific target infrastructure triggers the generation and insertion of a new phase. In the embodiment of Fig. 3B, Infrastructure 2 is determined as requiring the execution of tasks in a cleanup phase. Hence, user interface 300 displays a representation of a cleanup phase. The depicted cleanup phase includes cleanup tasks in task lists 315 that are to be executed on behalf of each deprovisioned virtual machine. Note that these tasks are typically performed by cloud management server 155 upon receiving a request by application management server 110.

Further, in the embodiment depicted in Fig. 3B, user interface 300 includes a button 330 for requesting deprovisioning of the application according to the displayed deprovision plan. That is, when button 330 is selected by an end user, application management server 110 generates and transmits deprovisioning requests to cloud management server 155.

In addition, Fig. 3B depicts a deprovision join point. The deprovision join point represents a stopping point in the deprovisioning process. That is, at the deprovision join point, application management server 110 determines whether all tasks in the previous phase have completed. Thus, in Fig. 3B, assuming the illustrated deprovisioning plan is put into execution via selection of button 320, application management server 110 determines whether quiesce and uninstall tasks in task lists 310 for each of the virtual machines have completed. If each of these tasks has completed, then the deprovisioning process proceeds to the next phase, namely, the cleanup phase shown in Fig. 3B. However, if application management server 110 determines that one or more tasks in task lists 310 of the deprovision phase has not completed, then the deprovisioning process halts.

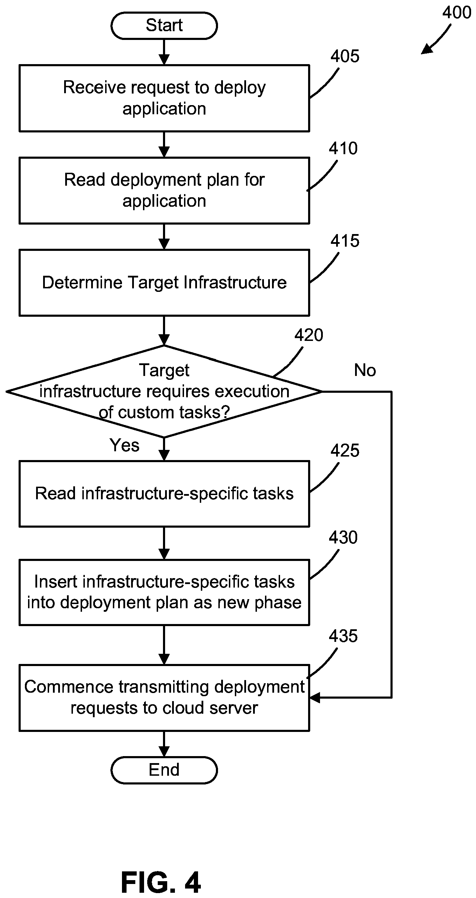

Fig. 4 is a flow diagram that depicts a method 400 for determining a deployment plan for a cloud-based application, according to one or more embodiments. Method 400 is typically executed by software modules executing within application management server 110.

Method 400 begins at step 405, where application management server 110 receives a request to deploy a cloud-based application. Such a request is typically generated and transmitted from an application designer that accesses a host-based user interface, such as user interface 105 of management host 100.

After receiving the deployment request, method 400 proceeds to step 410. At step 410, application management server 110 reads a deployment plan for the application that is requested for deployment. According to one or more embodiments, the application deployment plan is read from an application deployment plan repository, such as the repository depicted in Fig. 1.

After reading the application deployment plan at step 410, method 400 proceeds to step 415. At step 415, application management server 110 determines the target cloud infrastructure for the deployment request. In embodiments, an application designer may request deployment of an application using a user interface such as user interface 200 depicted in Figs. 2A and 2B. As shown in the Figs. 2A and 2B, user interface 200 includes pulldown menu 220, which enables an application designer to select from a list of target infrastructures. In some embodiments, application management server 110 may automatically select an appropriate target cloud infrastructure by matching the requirements of the deployment plan to the capabilities of available cloud infrastructures. Further, user interface 200 provides a button 230 to instruct application management server 110 to transmit a deployment request to a cloud management server. When button 230 is selected, embodiments of application management server 110 determine which of the cloud infrastructures is selected.

After determining the target infrastructure at step 415, method 400 then proceeds to step 420. At step 420, application management server 110 determines whether the selected target infrastructure requires the execution of any infrastructure-specific (i.e., customized) tasks prior to deployment of an application to that infrastructure. For example, application management server 110 may determine that certain infrastructures that assign IP addresses in a dynamic fashion (according to, for instance, a DHCP protocol) to newly instantiated virtual machines do not publish those addresses for use by software configuration programs. Thus, for such infrastructures, application management server 110 determines that one or more tasks need to be included in the deployment plan for the requested application.

It should be noted that other infrastructure-specific tasks (aside from tasks related to the discovery of dynamically assigned IP addresses of virtual machines) may be determined as required to be executed on the target infrastructure prior to an application deployment thereto. For example, the process of configuring a deployed application may require information regarding the mount points of certain data storage devices in a Network File System (NFS)-based storage network. In another example, an application may require to be configured with the address of a firewall or proxy server that is unknown to an application designer prior to deployment. In still another example, deployed virtual machines, during execution, may perform clock synchronization between their respective system clocks. In such a case, the virtual machines would typically use the Network Time Protocol (NTP) in order to access certain accurate NTP time servers whose addresses would need to be included in the deployed virtual machines' configurations.

If, at step 420, application management server 110 determines that the target infrastructure does not require the execution of any custom tasks, then method 400 proceeds directly to step 435, where application management server 110 commences transmitting deployment requests based on the deployment plan for the requested application to cloud management server 155. However, if, at step 420, application management server 110 determines that the target cloud infrastructure does require the execution of infrastructure-specific tasks, then method 400 proceeds to step 425.

At step 425, application management server 110 reads infrastructure-specific tasks that are required to be carried out. In one or more embodiments, the infrastructure-specific tasks are stored in a repository that is accessible to application management server. In such a repository, each of the tasks is associated with a particular infrastructure and a particular phase that precedes it (e.g., the "bootstrap" phase). For example, referring to Fig. 2B, the tasks in task lists 210 that are included in the pre-exec phase are stored in the aforementioned repository associated with Infrastructure 2 (the selected target infrastructure in Fig. 2B) and with the bootstrap phase (which is the preceding phase).

Next, method 400 proceeds to step 430. At step 430, application management server 110 inserts the infrastructure-specific tasks read at step 425 into the overall application deployment plan as a new phase of the deployment. For example, the application management server 110 inserts the tasks in task lists 210 into a new pre-exec phase, as shown in Fig. 2B.

Method 400 then proceeds to step 435, where application management server 110 commences transmitting deployment requests based on the deployment plan for the requested application to cloud management server 155. After step 435, method 400 terminates.

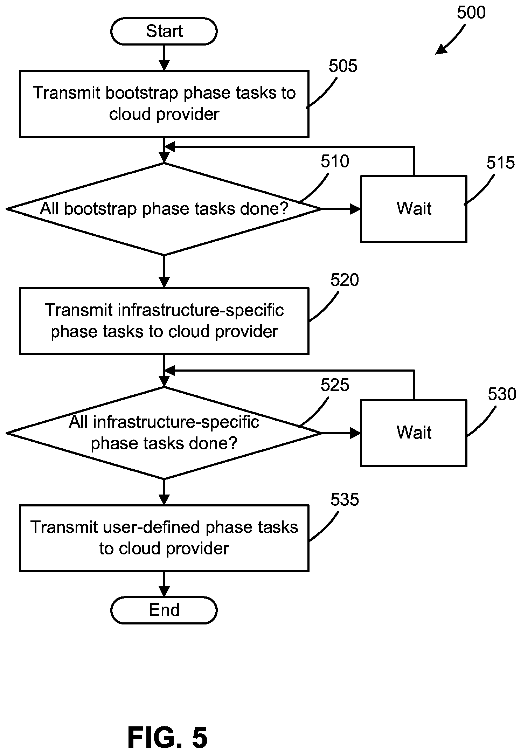

Fig. 5 is a flow diagram that depicts a method 500 of transmitting deployment requests in phases to a cloud management server, according to one or more embodiments. Method 500 is typically executed by one or more software modules executing within application management server 110 (such as, for example, application deployment requestor 140).

Method 500 begins at step 505, where application management server 110 transmits bootstrap phase tasks to a cloud provider (e.g., cloud management server 155 in Fig. 1). As previously mentioned, in certain embodiments, tasks executed in the bootstrap phase include the instantiation of virtual machines in the cloud infrastructure, as well as distributing deployment agent platforms to the instantiated virtual machines. Deployment agents are configured to execute within the instantiated virtual machines and are configured to communicate with cloud management servers, download software packages, and initiate the installation of those packages.

Next, at step 510, application management server 110 monitors the deployment and determines whether all bootstrap phase tasks that were transmitted at step 505 have completed. If application management server 110 determines that all bootstrap phase tasks have not completed, then method 500 proceeds to step 515, where application management server 110 waits a predetermined amount of time. After waiting the predetermined amount of time, method 500 proceeds back to step 510, where application management server 110 again determines whether all bootstrap phase tasks have completed.

When application management server 110 determines that all bootstrap phase tasks have indeed completed, then method 500 proceeds to step 520. At step 520, application management server 110 transmits infrastructure-specific tasks (i.e., "custom" tasks) to the cloud provider. As previously mentioned, examples of infrastructure-specific tasks include network setup tasks that were described in connection with Fig. 2B. After transmitting the infrastructure-specific tasks, application management server 110 monitors the deployment and determines whether all infrastructure-specific tasks transmitted at step 520 have completed. If application management server 110 determines that all infrastructure-specific tasks have not completed, then method 500 proceeds to step 530, where application management server 110 waits a predetermined amount of time. After waiting the predetermined amount of time, method 500 proceeds back to step 525, where application management server 110 again determines whether all infrastructure-specific tasks have completed. Due to the combination of steps 520, 525, and 530, the infrastructure-specific tasks comprise a distinct deployment phase (e.g., a pre-exec phase).

When application management server 110 determines that all infrastructure-specific tasks have indeed completed, then method 500 proceeds to step 535. At step 535, application management server 110 transmits so called "user-defined" (i.e., exec phase) tasks to the cloud provider. Typically, user-defined tasks comprise instructions for the virtual machines to download software packages and initiated installation of the software packages therein. As previously mentioned, this is typically accomplished by transmitting a request to cloud management server 155, which, in turn, invokes the individual deployment agents of the virtual machines instantiated in the cloud. The deployment agents then download and install the appropriate software modules in accordance with the overall deployment plan for the application.

After step 535, method 500 terminates. However, it should be noted that, in other embodiments, additional task phases (i.e., "post-exec" phases) may be transmitted to and executed in the cloud platform after the user-defined tasks have completed. Such additional phases include, for example, deleting temporary files and unmounting any temporarily mounted disks required for installation and configuration of application components during previous phases.

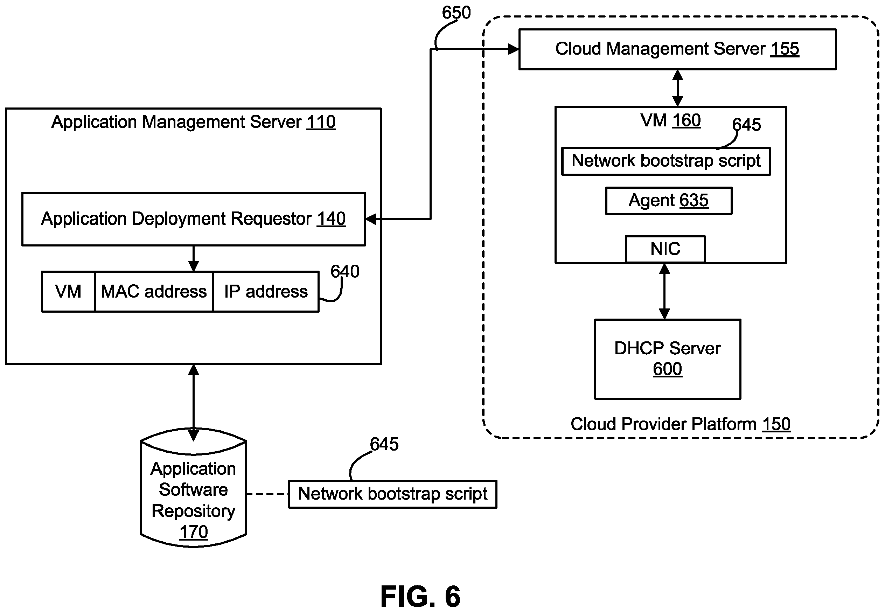

As was previously mentioned, one example of a "pre-exec" phase task is discovering dynamically assigned IP addresses of virtual machines that are instantiated in a cloud infrastructure. Further, after discovering those IP addresses, such a pre-exec task performs updates to installation scripts or installation configuration files based on the discovered addresses. Fig. 6 is a conceptual diagram that illustrates, according to one or more embodiments, a process for discovering a dynamically allocated IP address for a virtual machine instantiated in a cloud infrastructure and updating software installation files based on the discovered addresses.

As shown in Fig. 6, VM 160 is a virtual machine instantiated by cloud management server 155 in cloud provider platform 150. Cloud management server 155 instantiates VM 160 in response to a request (i.e., a "bootstrap" phase request) transmitted by application deployment requestor 140. At the time VM 160 is instantiated, VM 160 includes, among other things, a virtual network interface card (or NIC). The virtual NIC emulates a physical network adapter for the virtual machine and enables the virtual machine to communicate over virtual communication channels with other cloud virtual machines, as well as with physical networks that are external to the cloud platform. When VM 160 is instantiated, the virtual NIC is assigned a MAC address. According to embodiments, the MAC address is included with the request transmitted by application deployment requestor 140. An application designer configures MAC addresses for virtual NICs when generating an application blueprint using application modeling module 115. Thus, at the time an application blueprint is generated, application management server 110 associates a modeled virtual machine with one or more MAC addresses, which correspond to the virtual NICs configured therein. As previously mentioned, when VM 160 is instantiated, VM 160 is also supplied with a deployment agent 635. Deployment agent 635, according to one or more embodiments, enables VM 160 to communicate with application management server 110 (via cloud management server 155) in order to, for example, access and install software packages during an application deployment.

Further, in cloud environments that assign IP addresses dynamically (e.g., according to the DHCP protocol), VM 160 (or, alternatively, cloud management server 155) transmits one or more requests to a DHCP server 600 to generate an IP address for each virtual NIC configured therein. In response, DHCP server 600 generates one or more IP addresses, which are assigned to each virtual NIC of VM 160. That is, once the IP addresses are assigned, VM 160 may be addressed over a TCP/IP-based network using the assigned addresses. However, when the IP addresses are assigned to the virtual NICs of VM 160, these addresses are not known to application management server 110, nor are they present in any installation scripts or configuration files for any of the software packages to be installed on virtual machines instantiated in cloud provider platform 150. This presents a problem for certain applications (such as database clients and load balancers) that need to connect to other virtual machines during installation. For example, if a database client application is installed on a virtual machine, it is often the case that the client application installation process needs to connect to a database that is running on a different virtual machine in order to ensure that the application is operating properly. Without knowing the IP address of the database server virtual machine, the installation of the database client application fails.

Therefore, as shown in Fig. 6, application deployment requestor 140 transmits to cloud management server 155, during a "pre-exe" deployment phase, a network bootstrap script 645. According to embodiments of the present invention, network bootstrap script 645 is received by cloud management server 155 and deployed to VM 160. VM 160 then executes network bootstrap script 645 in order to determine the IP address of each virtual NIC configured therein. In one or more embodiment, network bootstrap script 645 reads configuration properties corresponding to the virtual NICs in order to determine the IP addresses thereof. In addition, network bootstrap script 645 associates each IP address with the MAC address of the corresponding virtual NIC. Network bootstrap script 645 then transmits the MAC addresses and IP addresses back to application management server 110 (via cloud management server 155), as shown by the arrow denoted as 650 in Fig. 6. Application management server 110 then receives the MAC and IP addresses. At that time, application management server 110 associates the received MAC and IP addresses with the corresponding virtual machine that is a component of the current deployment. It should be noted that application management server 110 is able to perform the association because, as mentioned earlier, application management server 110 associates each virtual machine configured in an application blueprint with a MAC address for each virtual NIC configured for the corresponding virtual machine. The association of a virtual machine with MAC and IP addresses is depicted in Fig. 6 by table 640.

In addition, application management server 110 updates installation packages, such as web archive (WAR) files, enterprise archive (EAR) files, and application installation configuration files based on the received IP addresses. For example, if a database client application is to be deployed to several virtual machines in the cloud infrastructure, each of which must connect to a database server during installation of the database client application, then application management server 110 updates, for example, a WAR file for the database client application (which resides, typically, in application software repository 170). According to embodiments, the update consists of inserting the IP address of the database server at an appropriate point in the target WAR file. Therefore, when the WAR file is downloaded and installed at a later point in the deployment by client virtual machines instantiated in the cloud infrastructure, each of the client virtual machines that install the database client application are able to connect to the database server virtual machine using the inserted IP address.

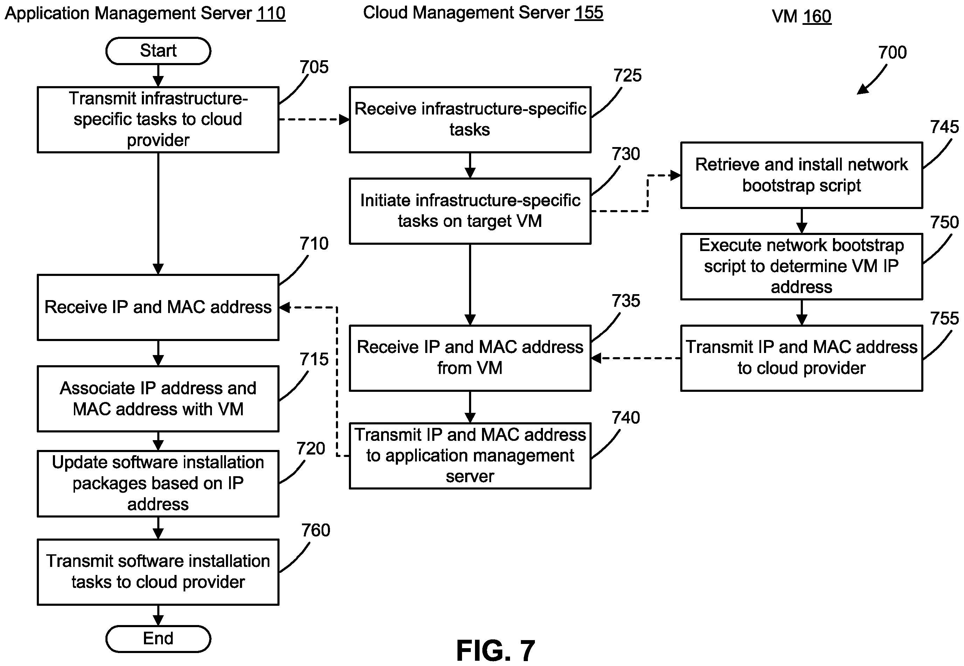

Fig. 7 is a flow diagram that illustrates a method 700 for discovering IP addresses of virtual machines provisioned in a cloud-based infrastructure, according to embodiments. The steps of method 700 are typically performed by application management server 110, cloud management server 155, and VM 160. Method 700 begins at step 705, where application management server 110 transmits one or more infrastructure-specific tasks to a cloud management server. As previously mentioned, infrastructure-specific tasks are typically performed in a "pre-exec" phase of an application deployment. In the embodiment illustrated in Fig. 7, the infrastructure-specific tasks include instructions for a virtual machine to retrieve and execute a "network bootstrap" script that discovers and transmits IP addresses for virtual NICs configured for the virtual machine.

At step 725, cloud management server 155 receives the infrastructure-specific tasks from application management server 110. Next, at step 730, cloud management server 155 initiates the infrastructure-specific tasks on one or more virtual machines instantiated in the cloud infrastructure. In embodiments, cloud management server 155 instructs one or more virtual machines to retrieve the aforementioned network bootstrap script from a data storage device accessible to each cloud-based virtual machine. In response, at step 745, a VM 160, having been instructed as above, retrieves and installs the network bootstrap script. At step 750, VM 160 then executes the network bootstrap script in order to determine the IP addresses associated with one or more virtual NICs of the virtual machine. After determining the IP addresses, VM 160 transmits the IP address for each NIC, as well as the MAC address for each NIC. Each transmitted address pair forms an association between a MAC address and an IP address. The address pairs are transmitted back to cloud management server 155.

At step 735, cloud management server 155 receives the transmitted IP and MAC addresses from VM 160. At step 740, cloud management server transmits the received IP and MAC addresses back to application management server 110.

Application management server 110, at step 710, receives the IP and MAC addresses from cloud management server 155. Next, at step 715, application management server 110 associates the receive IP and MAC addresses with a corresponding virtual machine that is a component of the application currently under deployment. After performing the association, application management server 110 then updates software packages that are to be deployed to virtual machines in the cloud infrastructure, based on the received IP addresses. In one example, mentioned earlier, application management server updates the WAR file for a database client application by inserting the IP address of a database server. In still another example, application management server 110 updates a properties file included in an installation package for a load balancing server. The properties file is updated with the IP addresses of each virtual machine that the load balancer connects to during execution.

Finally, at step 760, application management server transmits one or more software installation tasks to cloud management server 155. According to this embodiment, the software installation tasks transmitted at step 760 are "exec" phase tasks. Once the tasks are received by cloud management server 155, cloud management server 155 instructs one or more VMs 160 (via corresponding deployment agents) to download and install the software packages that application management server 110 updated in step 720.

### POLICY MANAGEMENT OF DEPLOYMENT PLANS

"Infrastructure-as-a-Service" (also commonly referred to as "IaaS") generally describes a suite of technologies provided by a service provider as an integrated solution to allow for elastic creation of a fully virtualized, network, and pooled computing platform (sometimes referred to as "cloud computing platform"). Enterprises may use IaaS as a business-internal organizational cloud computing platform (sometimes referred to as a "private cloud") that gives an application developer access to infrastructure resources, such as virtualized servers, storage, and networking resources. By providing ready access to the hardware resources required to run an application, the cloud computing platform enables developers to build, deploy, and manage the lifecycle of a web application (or any other type of networked application) at a greater scale and at a faster pace than ever before.

One or more embodiments of the present disclosure provide a deployment system for deploying a multi-tier application to a cloud computing environment. This deployment system enables a developer or "application architect" to create "application blueprints." The application blueprints define the structure of the application, enable the use of standardized application infrastructure components, and specify installation dependencies and default configurations. The application blueprints define the topology for deployment in an infrastructure-agnostic manner to be portable across different cloud computing environments.

Embodiments of the present disclosure provide a method for deploying an application. The method includes receiving a deployment plan comprising a nested object having a plurality of levels. The method further includes, for each level, retrieving a policy having a domain object that matches a current level of the nested object and determining a next level of the nested object until no next level exists. The method includes determining compliance of the deployment plan to the one or more retrieved policies, and executing the deployment plan to deploy the application in a cloud environment responsive to determining compliance.

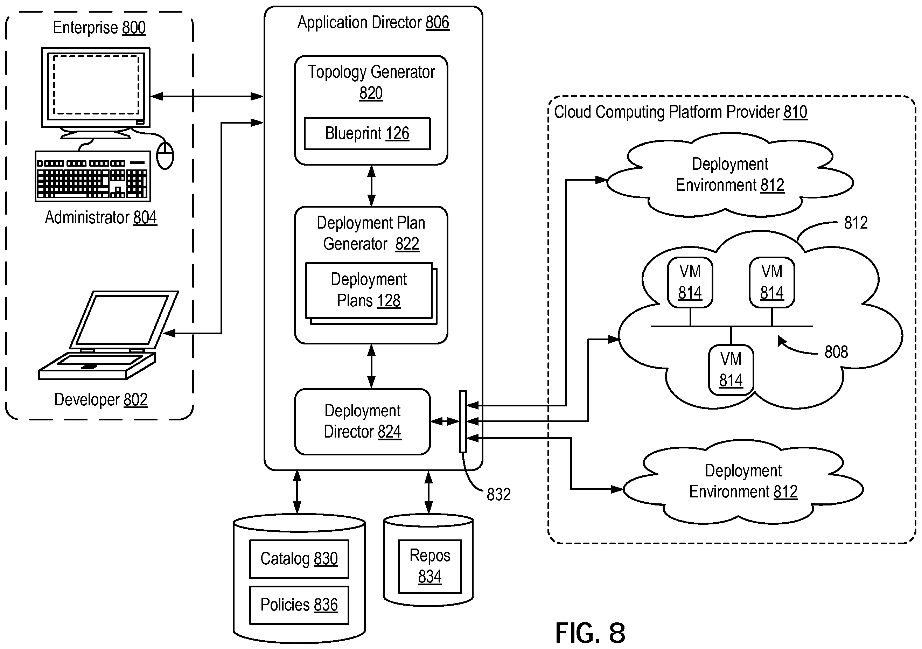

Figure 8 depicts one embodiment of a system for deploying an application on multiple cloud computing environments. In this embodiment, a multi-tier application created by developer 802 is being deployed for enterprise 800 in a deployment environment 812 provided by a cloud computing platform provider 810 (sometimes referred to simply as "cloud provider"). As depicted in Figure 8, cloud computing platform provider 810 may provide multiple deployment environments 812, for example, for development, testing, staging, and production of the application. Enterprise 800 may access services from cloud computing platform provider 810, for example, via REST (Representational State Transfer) APIs (Application Programming Interface) or any other client-server communication protocol. One particular implementation of a REST API for cloud computing services is vCloud Director API available from VMware, Inc. Cloud computing platform provider 810 provisions virtual computing resources (e.g., virtual machines, or "VMs," 814) to provide a deployment environment 812 in which enterprise 800 can deploy its multi-tier application. One particular example of a deployment environment is one implemented using cloud computing services from a vCloud DataCenter available from VMware, Inc.

A developer 802 of enterprise 800 uses an application director 806, which may be running in one or more VMs, to orchestrate deployment of a multi-tier application 808 onto one of deployment environments 812 provided by a cloud computing platform provider 810. As illustrated, application director 806 includes the following software modules: a topology generator 820, a deployment plan generator 822, and a deployment director 824. Topology generator 820 generates a blueprint 826 that specifies a logical topology of the application 808 to be deployed. Blueprint 826 generally captures the structure of an application 808 as a collection of application components executing on virtual computing resources.

For example, blueprint 826 generated by application director 806 for an online store application may specify a web application (e.g., in the form of a Java web application archive or "WAR" file comprising dynamic web pages, static web pages, Java servlets, Java classes, and other property, configuration and resources files that make up a Java web application) executing on an application server (e.g., Apache Tomcat application server) and that uses as a database (e.g., MongoDB) as a data store. It is recognized that the term "application" is used herein to generally refer to a logical deployment unit, comprised of application packages and their dependent middleware and operating systems. As such, in the example described above, the term "application" may refer to the entire online store application, including application server and database components, rather than just the application logic of the web application itself.

Blueprint 826 may be assembled out of items from a catalog 830, which is a listing of available virtual computing resources (e.g., VMs, networking, storage) that may be provisioned from cloud computing platform provider 810 and available application components (e.g., software services, scripts, code components, application-specific packages) that may be installed on the provisioned virtual computing resources. Catalog 830 may be pre-populated and customized by an administrator 804 (e.g., IT or system administrator) that enters in specifications, configurations, properties, and other details about each item in catalog 830. Blueprint 826 may define one or more dependencies between application components to indicate an installation order of the application components during deployment. For example, since a load balancer usually cannot be configured until a web application is up and running, developer 102 may specify a dependency from an Apache service to an application code package.

Deployment plan generator 822 of application director 806 generates a deployment plan 828 based on blueprint 826 that includes deployment settings for blueprint 826 (e.g., virtual computing resources' cluster size, CPU, memory, networks) and an execution plan of tasks having a specified order in which virtual computing resources are provisioned and application components are installed, configured, and started. Deployment plan 828 provides an IT administrator with a process-oriented view of blueprint 826 that indicates discrete steps to be performed to deploy application 808. Different deployment plans 828 may be generated from a single blueprint 826 to test prototypes (e.g., new application versions), to scale-up and scale down deployments, or deploy application 808 to different deployment environments 812 (e.g., testing, staging, production).

Deployment director 824 of application director 806 executes deployment plan 828 by communicating with cloud computing platform provider 810 via a cloud interface 832 to provision and configure VMs 814 in a deployment environment 812, as specified by deployment plan 828. Cloud interface 832 provides a communication abstraction layer by which application director 806 may communicate with a heterogeneous mixture of cloud provider 810 and deployment environments 812. After application 808 has been deployed, application director 806 may be utilized to monitor and modify (e.g., scale) the deployment.

According to embodiments of the present disclosure, deployment director 824 of application director 806 is configured to determine compliance of deployment plan 828 to one or more policies 836. A policy 836 is a statement of declaration that controls designated aspects of a target system, i.e., deployment of an application. In one embodiment, policies 836 may be specified by a user (e.g., administrator 804) and enforced on other users (e.g., developer 802) when those other users deploy an application into one of deployment environments 812 provided by a cloud computing platform provider 810. Deployment director 824 may generate a "compliance view" user interface that lists all policies applicable to a target deployment, and an indication of whether the target deployment complies with each policy. While embodiments describe identify policies 836 that are applicable to a deployment of an application, deployment director 824 may traverses a data model which reflects the hierarchy associated with any action (i.e., deployment), and retrieves any policies 836 matching that level of the hierarchy.

In one embodiment, policies 836 may be attachable (to various points of interest), propagatable (through a hierarchy of objects), scannable and reportable (to assess a system's compliance against the policy), remediable (e.g., mutate the target system to make the system compliant), and exceptionable (i.e., approval-driven policy exceptions). For example, a blacklist policy that prohibits a deployment from having a particular software service as part of its topology may be "attached" to a deployment hierarchy level associated with deployment environments. In another example, a maximum memory policy specifying that no node in a deployment may have more than a particular amount (e.g., 1024 MB) of RAM may include a "remedial" action that modifies (i.e., decreases) the allocated RAM for any violating node in the deployment to make the target system compliant. In yet another example, a maximum VM count policy specifying that no deployment may exceed a particular number of VMs may permit exceptions to the policy in response to approval (e.g., granted by an administrator) that a violating deployment can still proceed despite having excess VMs. It is recognized that these are merely illustrative examples, and other types of policies may be used.

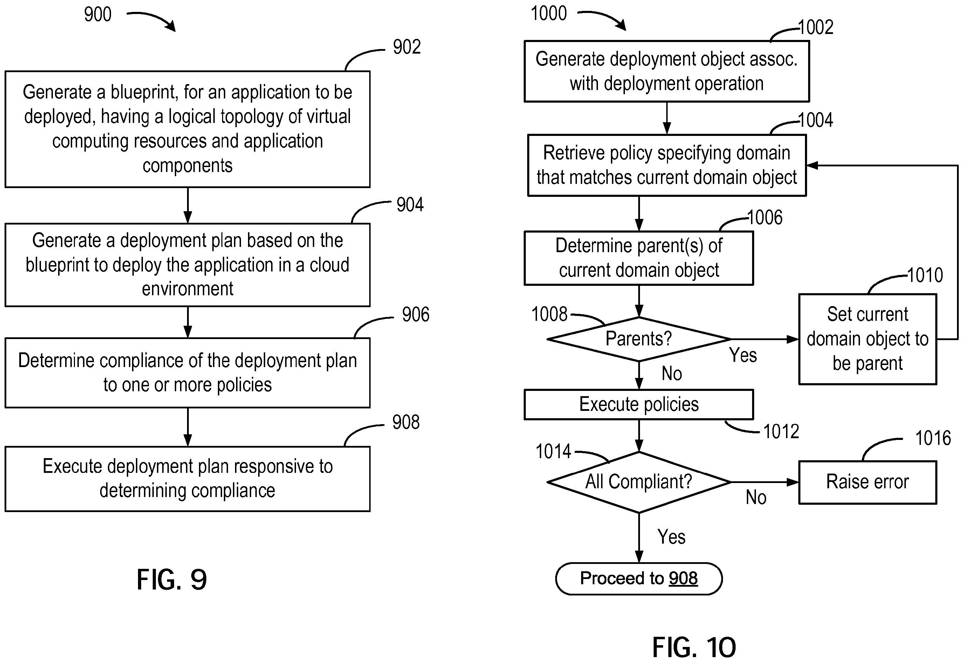

Figure 9 is a flow diagram of an exemplary deployment method performed by application director 906 to deploy an application in a deployment environment 912 provided by cloud computing platform provider 910. It should be recognized that, even though the method is described in conjunction with the systems of Figure 8, any system configured to perform the method steps, in any order, is within the scope of embodiments of the invention.

In step 902, in response to user inputs (e.g., from developer 802), application director 806 generates a blueprint 826, for an application to be deployed, that includes a logical topology of virtual computing resources and application components for supporting the application. In one implementation, developer 802 may utilize a graphical user interface provided by application director 806 to assemble and arrange items from catalog 830 into a topology that represents virtual computing resources and application components for supporting execution of application 808.

In step 904, application director 806 generates a deployment plan 828 based on blueprint 826 to deploy application 808 in a specific cloud environment (e.g., deployment environments 812). Step 904 may be carried out in response to user inputs (e.g., from developer 802) that initiate a deployment process for application 808 on a specified deployment environment. From an application blueprint 826, a user may generate multiple deployment plans 828 having configurations customized for a variety of deployment environments and/or cloud providers, for example, for testing prototypes, deploying to staging environments, or upgrading existing deployments. While blueprints 826 provide a component-oriented view of the application topology, deployment plans 828 provide a step-oriented view of the application topology defined in blueprint 826 that depicts time dependencies between tasks to deploy the application components in a particular order. Deployment plans 828 provide settings, such as cloud templates, networks, and application component properties allowed for use in specific deployment environments.

In step 906, application director 806 determines compliance of deployment plan 828 to one or more policies 836. In one embodiment, a deployment may be characterized as a nested object, and a policy 836 may target a specific level within that nested object. Using the example system of Figure 8, a deployment generally involves a particular deployment plan 826 (first level), which specifies a particular deployment environment 812 (second level), of a particular cloud computing platform provider 810 (third level). To identify policies 836 that are applicable to a deployment, application director 806 traverses a data model which reflects the hierarchy associated with a deployment, and retrieves any policies 836 matching that level of the hierarchy. Operations for determining policy compliance are described in further detail in Figure 3.

In step 908, application director 806 executes deployment plan 828 responsive to determining compliance of the deployment plan to policies 836. In some embodiments, a policy 836 may have a critical priority, which causes a target deployment plan to not be executed in case of non-compliance, or a non-critical priority (e.g., warning priority), which permits a deployment plan to be executed anyway, but with accompanying error messages and/or warning indications.

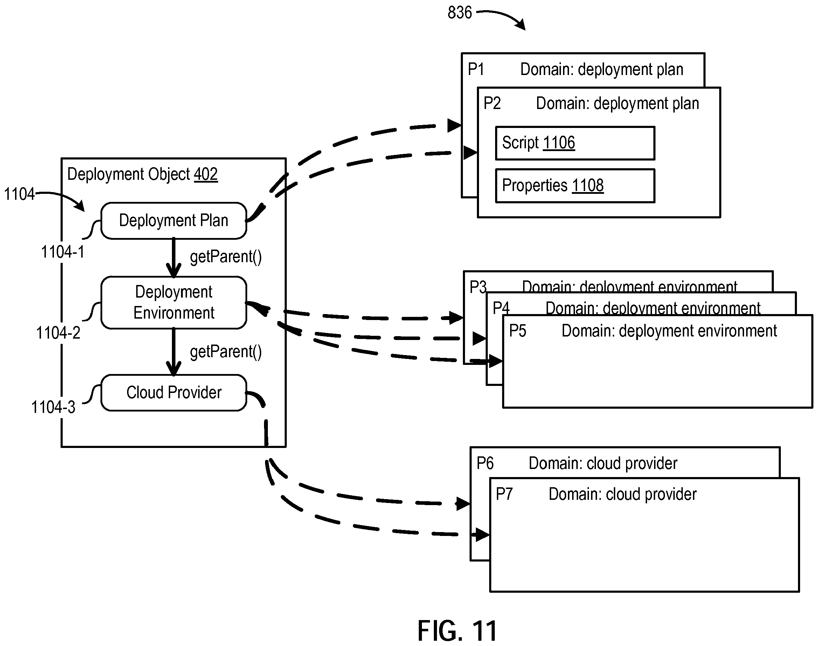

Figure 10 is a flow diagram that illustrates a method 1000 for determining compliance of a deployment plan to one or more policies, according to one embodiment of the present disclosure. To facilitate explanation, method 1000 is described in conjunction with Figure 11, which is a block diagram depicting a deployment object 1102 used to manage one or more policies 836, according to an embodiment.

At step 1002, application director 806 generates a deployment object 1102 associated with a deployment operation. It is recognized that deployment object 1102 may be obtained as part of step 904 of method 900 described earlier. Deployment object 1102 is a data object that encapsulates data associated with an application blueprint 826 and data associated with a deployment plan 828. In one embodiment, deployment object 1102 is a nested object having a plurality of levels that represent different aspects, or "domains", of the deployment operation. Deployment object 1102 may be comprised of a plurality of domain objects 1104, which are data objects that encapsulate data associated with a particular domain.

In the example shown in Figure 11, deployment object 1102 includes a first domain object 1104-1 associated with deployment plan 828, a second domain object 1104-2 associated with deployment environments 812, and a third domain object 1104-3 associated with cloud providers 810. These domain objects 1104-1 to 1104-3 encapsulate data associated with each deployment-related domain. For example, the deployment plan domain object (e.g., 1104-1) may contain plan-related data such as a topology for a three-tier application to be deployed, a listing of applications components to be installed and on how many nodes (e.g., VMs 814). The deployment environment domain object (e.g., 1104-2) may contain environment-related data, properties, and parameters, such as an indication of the type of deployment environment (e.g., production, development). The cloud provider data object (e.g., 1104-3) may contain provider-related data, such as login credentials, authentication keys, and cloud gateway addresses.

To determine which policies 836 are applicable to the deployment, application director 806 retrieves policies while traversing through the hierarchy of domain objects of deployment object 1102, starting with a first domain object (e.g., object 1104-1). In one embodiment, at step 1004, application director 806 retrieves any policies 836 specifying a deployment domain that match a current domain object. For example, as shown in Figure 11, on a first pass, application director 806 retrieves policies P1 and P2 that specify the domain of "deployment plan." A policy 836 may target a particular deployment domain in order to control the deployment based on data from that domain. For example, a policy P1 may be a maximum memory policy, i.e., that, in any deployment, no node may have more than particular amount (e.g., 1024 MB) of RAM. To enforce such a policy P1, data would be needed from deployment plan 828, i.e., from the deployment plan domain. In another example, a policy P2 may be a maximum VM count policy, i.e., that no deployment may exceed a particular number of VMs.

Responsive to retrieving the policies, application director 106 traverses to a next level of deployment object 1102. In one embodiment, at step 1006, application director 806 determines a parent of the current domain object. In one implementation, each domain object 1104 may be configured to support a class interface for determining a next level (i.e., parent) of that domain object 1104. To determine the parent of a current domain object, application director 806 may invoke a function (e.g., getParent()) of the instance of the current domain object and obtain handle to the parent. In the example in Figure 11, application director 806 may determine that the parent of deployment plan object 1104-1 is deployment environment object 1104-2.

Responsive to determining that a parent object exists for the current domain object, at step 1010, application director 806 proceeds to set the current domain object to be the parent. Application director 806 may proceed to retrieve policies 836 that match that the new current domain object (e.g., step 1002) and determine a next level to domain object (e.g., step 1004) until application director 806 determines no next level exists.

In the example in Figure 11, application director 806 sets the current domain object to be "deployment environment" and retrieves any policies specifying "deployment environment" as the domain. Specifically, application director 806 retrieves policies P3, P4, and P5 having a domain that matches the current domain object of "deployment environment." As with the policies P1 and P2, policies P3, P4, and P4 control aspects of the deployment except in this case based on data from the deployment environment domain. For example, policy P3 may be a blacklist service policy that prohibits a multi-tier application having a particular software service as part of its topology from deploying in a particular type of deployment environment. Such policies may be useful in enforcing software licensing restrictions between production and development deployment environments. To enforce such a policy, data would be needed from a deployment environment object, e.g., indicating the type of deployment environment has been specified for this deployment.

Continuing with this example, application director 806 may next determines a parent of deployment environment object 1104-2 is cloud provider object 1104-3, e.g., by invoking getParent() on the instance of object 1104-2, and sets the current domain object as cloud provider object 1104-3. Application director 806 retrieves policies P6 and P7 having a domain that matches the current domain of "cloud provider."

Referring back to Figure 10, at step 1008, application director 806 may determine that no parent object exists for the current domain object. For example, when application director 806 attempts to determine a parent of cloud provider object 1104-3, no parent object is found, as this example hierarchy ends at the cloud provider level. At this point, application director 806 has gathered together a plurality of policies P1, P2, P3, P4, P5, P6, and P7.

At step 1012, responsive to determining that no parent object exists for the current domain object, application director 806 executes the plurality of retrieved policies 836 associated with the deployment. In one embodiment, a policy 836 may include or may be embodied as a script 1106 comprising program code that, when executed, determines a state of compliance using data from deployment object 1102 as a "payload." In one implementation, a policy 836 may comprise JavaScript program code configured to determine a state of compliance of deployment object 1102. An example policy 836 is shown as pseudo-code in Table 1 below.

**Table 1: Sample pseudo-code for a deployment policy**

| |
|---|
| ``` // Policy properties var min_cpu_count; var max_cpu_count; // Policy input var eventPayload; var deploymentProfile = eventPayload.getDeploymentProfile(); var /*String*/ complianceResult = "COMPLIANT"; ``` |
| ``` var /*String*/ complianceMessage = ""; foreach deploymentProfile.getProfileNodes() as nodes foreach nodes.getProperties() as prop var propDefinition = prop.getPropertyDefinition(); if (propDefinition.getKey().equals("vCPU")) { var cpu = prop.getValue(); if (cpu < min_cpu_count \|\| cpu > max_cpu_count) { set msg = "Policy Violation: ..."; complianceResult = "NON_COMPLIANT"; complianceMessage += msg; } } end foreach end foreach ``` |

In some embodiments, a policy 836 may include one or more properties 1108, which are input parameters used by script 1106 in determining compliance. Properties 1108 enable a script 1106 to be written in a generalized manner. A user may create an "instance" of a policy 836 and specify a particular property value for that instance. For example, a user may create an instance of a generalized maximum memory policy that specifies a value for a property "max_mem" to be "1024". In the example policy shown in Table 1, properties 1108 are declared for a minimum number of CPUs ("var min_cpu_count") and a maximum number of CPUs ("var max_cpu_count"). For simplicity of explanation, policies and instances of policies may be referred to interchangeably.

In one embodiment, application director 806 executes the plurality of policies 836 in a sandbox environment, with limited access to the execution environment except for deployment object 1102, i.e., the payload. In one implementation, policies 836 may be embodied as program code written in a scripting language (e.g., JavaScript), and are executed by an application director 806 software module implemented in a different programming language (Java). In such implementations, application director 806 may use a framework configured to support embedding scripts, such as policies 836, into its Java source code, and providing access to Java objects (e.g., deployment object 1102) configured to be exposed to policies 836. One example framework for supporting other scripting languages may be found in Java Specification Request (JSR) 1023, describing scripting for the Java platform.

At step 1014, application director 806 determines whether the deployment plan is compliant with all of the plurality of policies 836. In one embodiment, execution of a policy 836 may generate an indication (i.e., "COMPLIANT" or "NON-COMPLIANT") of whether the deployment plan is compliant with that policy. The indications from executing all of the plurality of policies 836 may be aggregated and use to consider whether compliance has been determined. If so, application director 806 may proceed to execute the deployment, as in step 908 of method 900 described earlier. Otherwise, at step 1016, application director 806 may raise an error indicating the deployment plan does not comply with at least one of the plurality of policies 836 associated with the deployment plan. In some embodiments, the error may include one or more error messages generated by (execution of) policies 836. The generated error messages may be displayed in a "Compliance View" graphical user interface provided by application director 806. In other embodiments, policies 836 may define one or more remedial actions to be performed in response to a policy violation, such as uninstalling a blacklisted software service, or notifying an administrator of the policy violation. Although one or more embodiments have been described herein in some detail for clarity of understanding, it should be recognized that certain changes and modifications may be made without departing from the scope of the disclosure. The various embodiments described herein may employ various computer-implemented operations involving data stored in computer systems. For example, these operations may require physical manipulation of physical quantities-usually, though not necessarily, these quantities may take the form of electrical or magnetic signals, where they or representations of them are capable of being stored, transferred, combined, compared, or otherwise manipulated. Further, such manipulations are often referred to in terms, such as producing, yielding, identifying, determining, or comparing. Any operations described herein that form part of one or more embodiments of the disclosure may be useful machine operations. In addition, one or more embodiments of the disclosure also relate to a device or an apparatus for performing these operations. The apparatus may be specially constructed for specific required purposes, or it may be a general purpose computer selectively activated or configured by a computer program stored in the computer. In particular, various general purpose machines may be used with computer programs written in accordance with the teachings herein, or it may be more convenient to construct a more specialized apparatus to perform the required operations.

The various embodiments described herein may be practiced with other computer system configurations including hand-held devices, microprocessor systems, microprocessor-based or programmable consumer electronics, minicomputers, mainframe computers, and the like.

One or more embodiments of the present disclosure may be implemented as one or more computer programs or as one or more computer program modules embodied in one or more computer readable media. The term computer readable medium refers to any data storage device that can store data which can thereafter be input to a computer system-computer readable media may be based on any existing or subsequently developed technology for embodying computer programs in a manner that enables them to be read by a computer. Examples of a computer readable medium include a hard drive, network attached storage (NAS), read-only memory, random-access memory (e.g., a flash memory device), a CD (Compact Discs) --CD-ROM, a CD-R, or a CD-RW, a DVD (Digital Versatile Disc), a magnetic tape, and other optical and non-optical data storage devices. The computer readable medium can also be distributed over a network coupled computer system so that the computer readable code is stored and executed in a distributed fashion.

Although one or more embodiments of the present disclosure have been described in some detail for clarity of understanding, it will be apparent that certain changes and modifications may be made within the scope of the claims. Accordingly, the described embodiments are to be considered as illustrative and not restrictive, and the scope of the claims is not to be limited to details given herein, but may be modified within the scope of the claims. In the claims, elements and/or steps do not imply any particular order of operation, unless explicitly stated in the claims.

Many variations, modifications, additions, and improvements are possible. Plural instances may be provided for components, operations or structures described herein as a single instance. Boundaries between various components, operations and data stores are somewhat arbitrary, and particular operations are illustrated in the context of specific illustrative configurations. Other allocations of functionality are envisioned and may fall within the scope of the disclosure(s). In general, structures and functionality presented as separate components in exemplary configurations may be implemented as a combined structure or component. Similarly, structures and functionality presented as a single component may be implemented as separate components. These and other variations, modifications, additions, and improvements may fall within the scope of the appended claim(s).

## Claims

1. A method of deploying a cloud based application in a cloud computing environment comprising a cloud deployment platform with an application management server (110) executing thereon, and a cloud management server (155) deployed in a cloud infrastructure (150), the method comprising:
receiving, by the application management server (110), a request to deploy the cloud based application;
reading a deployment plan (135, 828) for the cloud based application requested for deployment, the deployment plan (135, 828) comprising one or more exec deployment phases and a first plurality of tasks to be executed in a cloud infrastructure (150);
selecting, by the application management server (110), a target infrastructure for the deployment request;
determining, by the application management server (110), based on the selected target infrastructure, that one or more infrastructure-specific network setup tasks are required to be executed in the target cloud infrastructure (150) prior to deployment of the cloud based application to the target cloud infrastructure (150), wherein at least one of the one or more infrastructure-specific network setup tasks include a discovery of a dynamically assigned internet protocol, IP, address of at least one virtual machine (160) instantiated in the target cloud infrastructure (150);
reading, by the application management server (110), the one or more infrastructure-specific network setup tasks that are required to be executed;
inserting, by the application management server (110), a new pre-exec deployment phase into the deployment plan, the new pre-exec deployment phase comprising the one or more infrastructure-specific network setup tasks read in the reading step;
transmitting, based on the pre-exec deployment phase of deployment plan, the one or more infrastructure-specific network setup tasks to the cloud management server (155) for execution in the cloud infrastructure (150), wherein the one or more infrastructure-specific tasks comprise instructions for the virtual machine (160) instantiated in the target cloud infrastructure (150) to discover and transmit an IP address for a virtual network interface card configured for the virtual machine (160);
receiving, by the application management server (110), the discovered IP address and a media access control, MAC, address for the virtual network interface card from the virtual machine (160) via the cloud management server (155);
associating, by the application management server (110), the received IP and MAC addresses with a corresponding virtual machine (160) that is a component of the cloud based application under deployment;
updating, by the application management server (110), the first plurality of tasks based on the received network addresses, and
transmitting, based on the one or more exec deployment phases of the deployment plan, the updated first plurality of tasks to the cloud management server (155) for execution in the cloud infrastructure (150).

2. The method of claim 1, further comprising:
determining that the cloud infrastructure (150) corresponds to a first cloud provider.

3. The method of claim 2,
wherein the tasks of a bootstrap deployment phase are transmitted to the cloud management server (155) before the tasks of an exec deployment phase.

4. The method of claim 3, further comprising the step of transmitting a second plurality of tasks to the cloud management server (155), wherein transmitting the second plurality of tasks to the cloud management server (155) comprises:
transmitting the tasks of the bootstrap deployment phase to the cloud management server (155);
after said transmitting of the tasks of the bootstrap deployment phase, transmitting the tasks of the new pre-exec deployment phase to the cloud management server (155); and
after said transmitting of the tasks of the new pre-exec deployment phase, transmitting the tasks of the exec deployment phase to the cloud management server (155).

5. The method of claim 4, further comprising:
before transmitting the tasks of the new pre-exec deployment phase, to the cloud management server (155):
monitoring the tasks of the bootstrap deployment phase; and
determining that each of the tasks of the bootstrap deployment phase has completed executing in the cloud infrastructure (150).

6. The method of claim 3, wherein the tasks of the bootstrap deployment phase comprise one or more tasks that, when executed in the cloud infrastructure (150), instantiate one or more virtual machines (160) in the cloud infrastructure (150).

7. The method of claim 3, wherein the tasks of the exec deployment phase comprise one or more tasks that, when executed in the cloud infrastructure (150), cause software to be installed on one or more of virtual machines (160) instantiated in the cloud infrastructure (150).

8. A non-transitory computer-readable medium comprising instructions executable by one or more hosts in a cloud computing environment, where the instructions, when executed, cause the one or more hosts to perform a method of deploying a cloud based application as set out in any one of claims 1 to 7.

9. A virtualized cloud computing system, comprising:
one or more host computers that implement a cloud deployment platform with first and second modules executing thereon;
a plurality of host computers executing in a cloud infrastructure (150); and
a cloud management server (155) in the cloud infrastucture (150); and
a management host (100) configured with a user interface (105, 200, 300), wherein the system is configured to perform a method of deploying a cloud based application, the method as set out in claims 1 to 7.

## Patentansprüche

1. Verfahren zum Einsetzen (Deployment) einer Cloud-basierten Applikation in einer Cloud-Rechenumgebung, umfassend eine Cloud-Deployment-Plattform mit einem darauf ausgeführten Applikationsmanagementserver (110) und einem in einer Cloud-Infrastruktur (150) eingesetzten Cloud-Managementserver (155), wobei das Verfahren umfasst:
Empfangen einer Anfrage nach Deployment der Cloud-basierten Applikation durch den Applikationsmanagementserver (110);
Lesen eines Deployment-Plans (135, 828) für die Cloud-basierte Applikation, deren Deployment angefordert wird, wobei der Deployment-Plan (135, 828) eine oder mehrere exec-Deployment-Phasen und eine erste Vielzahl von in einer Cloud-Infrastruktur (150) auszuführenden Tasks umfasst;
Auswählen einer Zielinfrastruktur für die Deployment-Anforderung durch den Applikationsmanagementserver (110);
Ermitteln durch den Applikationsmanagementserver (110) basierend auf der ausgewählten Zielinfrastruktur, dass vor dem Deployment der Cloud-basierten Applikation an die Ziel-Cloud-Infrastruktur (150) ein oder mehrere infrastrukturspezifische Netzwerkeinrichtungstasks in der Ziel-CloudInfrastruktur (150) ausgeführt werden müssen, wobei mindestens einer von dem einen oder den mehreren infrastrukturspezifischen Netzwerkeinrichtungstasks das Auffinden einer dynamisch zugewiesenen Internetprotokoll, IP, Adresse von mindestens einer virtuellen Maschine (160) einschließt, die in der Ziel-Cloud-Infrastruktur (150) instanziiert worden ist;
Lesen des einen oder der mehreren infrastrukturspezifischen Netzwerkeinrichtungstasks, die ausgeführt werden müssen, durch den Applikationsmanagementserver (110);
Einfügen einer neuen Vor-exec-Deployment-Phase in den Deployment-Plan durch den Applikationsmanagementserver (110), wobei die neue Vor-exec-Deployment-Phase den einen oder die mehreren infrastrukturspezifischen Netzwerkeinrichtungstasks umfasst, der/die in dem Leseschritt gelesen wurde(n);
Übertragen des einen oder der mehreren infrastrukturspezifischen Netzwerkeinrichtungstasks basierend auf der Vor-exec-Deployment-Phase des Deployment-Plans an den Cloud-Managementserver (155) zur Ausführung in der Cloud-Infrastruktur (150), wobei der eine oder die mehreren infrastrukturspezifischen Tasks Anweisungen für die virtuelle Maschine (160) umfassen, die in der Ziel-Cloud-Infrastruktur (150) instanziiert wurde, um eine IP-Adresse für eine virtuelle Netzwerkschnittstellenkarte aufzufinden und zu übertragen, die für die virtuelle Maschine (160) konfiguriert ist;
Empfangen der aufgefundenen IP-Adresse und einer Medienzugangssteuerungs, MAC, Adresse von dem Applikationsmanagementserver (110) für die virtuelle Netzwerkschnittstellenkarte von der virtuellen Maschine (160) mittels des Cloud-Managementservers (155);
Zuordnen der empfangenen IP- und MAC-Adressen zu einer entsprechenden virtuellen Maschine (160), die eine Komponente der Cloud-basierten Applikation ist, deren Deployment gerade läuft, durch den Applikationsmanagementserver (110);
Aktualisieren der ersten Vielzahl von Tasks basierend auf den empfangenen Netzwerkadressen durch den Applikationsmanagementserver (110), und
Übertragen der aktualisierten ersten Vielzahl von Tasks an den Cloud-Managementserver (155) zur Ausführung in der Cloud-Infrastruktur (150) basierend auf der einen oder den mehreren exec-Deployment-Phasen des Deployment-Plans.

2. Verfahren nach Anspruch 1, des Weiteren umfassend:
Ermitteln, dass die Cloud-Infrastruktur (150) einem ersten Cloud-Provider entspricht.

3. Verfahren nach Anspruch 2,
wobei die Tasks einer Bootstrap-Deployment-Phase vor den Tasks einer exec-Deployment-Phase an den Cloud-Managementserver (155) übertragen werden.

4. Verfahren nach Anspruch 3, des Weiteren umfassend den Schritt des Übertragens einer zweiten Vielzahl von Tasks an den Cloud-Managementserver (155), wobei Übertragen der zweiten Vielzahl von Tasks an den Cloud-Managementserver (155) umfasst:
Übertragen der Tasks der Bootstrap-Deployment-Phase an den Cloud-Managementserver (155);
nach dem Übertragen der Tasks der Bootstrap-Deployment-Phase Übertragen der Tasks der neuen Vor-exec-Deployment-Phase an den Cloud-Managementserver (155); und
nach dem Übertragen der Tasks der neuen Vor-exec-Deployment-Phase Übertragen der Tasks der exec-Deployment-Phase an den Cloud-Managementserver (155) .

5. Verfahren nach Anspruch 4, des Weiteren umfassend: vor dem Übertragen der Tasks der neuen Vor-exec-Deployment-Phase an den Cloud-Managementserver (155) :
Überwachen der Tasks der Bootstrap-Deployment-Phase; und
Ermitteln, dass jeder der Tasks der Bootstrap-Deployment-Phase seine Ausführung in der Cloud-Infrastruktur (150) abgeschlossen hat.

6. Verfahren nach Anspruch 3, wobei die Tasks der Bootstrap-Deployment-Phase einen oder mehrere Tasks umfassen, die bei Ausführung in der Cloud-Infrastruktur (150) eine oder mehrere virtuelle Maschinen (160) in der Cloud-Infrastruktur (150) instanziieren.

7. Verfahren nach Anspruch 3, wobei die Tasks der exec-Deployment-Phase einen oder mehrere Tasks umfassen, die bei Ausführung in der Cloud-Infrastruktur (150) bewirken, dass auf einer oder mehreren virtuellen Maschinen (160) zu installierende Software in der Cloud-Infrastruktur (150) instanziiert wird.

8. Nicht-flüchtiges computerlesbares Medium, das Anweisungen umfasst, die durch einen oder mehrere Hosts in einer Cloud-Rechenumgebung ausführbar sind, wobei die Anweisungen bei Ausführung bewirken, dass der eine oder die mehreren Hosts ein Verfahren zum Deployment einer Cloud-basierten Applikation wie in einem der Ansprüche 1 bis 7 beschrieben durchführen.

9. Virtualisiertes Cloud-Rechensystem, umfassend:
einen oder mehrere Host-Computer, die eine Cloud-Deployment-Plattform mit darauf ausgeführten ersten und zweiten Modulen implementieren;
eine Vielzahl von Host-Computern, die in einer Cloud-Infrastruktur (150) ausgeführt werden; und
einen Cloud-Managementserver (155) in der Cloud-Infrastruktur (150); und
einen Management-Host (100), der mit einer Benutzerschnittstelle (105, 200, 300) konfiguriert ist,
wobei das System konfiguriert ist, um ein Verfahren zum Deployment einer Cloud-basierten Applikation, das Verfahren wie in den Ansprüchen 1 bis 7 beschrieben, durchzuführen.

## Revendications

1. Procédé de déploiement d'une application en nuage dans un environnement infonuagique comprenant une plate-forme de déploiement en nuage sur laquelle est exécuté un serveur de gestion d'application (110), et un serveur de gestion en nuage (155) déployé dans une infrastructure en nuage (150), le procédé comprenant :
la réception, par le serveur de gestion d'application (110), d'une requête de déploiement de l'application en nuage ;
la lecture d'un plan de déploiement (135, 828) pour l'application en nuage au déploiement requis, le plan de déploiement (135, 828) comprenant une ou plusieurs phases de déploiement d'exécution et une première pluralité de tâches à exécuter dans une infrastructure en nuage (150) ;
la sélection, par le serveur de gestion d'application (110), d'une infrastructure cible pour la requête de déploiement ;
la détermination, par le serveur de gestion d'application (110), sur la base de l'infrastructure cible sélectionnée, qu'une ou plusieurs tâches d'établissement de réseau spécifiques à l'infrastructure doivent être exécutées dans l'infrastructure en nuage cible (150) avant le déploiement de l'application en nuage dans l'infrastructure en nuage cible (150), dans lequel au moins une des une ou plusieurs taches d'établissement de réseau spécifiques à l'infrastructure comporte une découverte d'une adresse de protocole Internet, IP, attribuée dynamiquement d'au moins une machine virtuelle (160) instanciée dans l'infrastructure en nuage cible (150) ;
la lecture, par le serveur de gestion d'application (110), des une ou plusieurs tâches d'établissement de réseau spécifiques à l'infrastructure dont l'exécution est requise ;
l'insertion, par le serveur de gestion d'application (110), d'une nouvelle phase de déploiement au stade pré-exécution dans le plan de déploiement, la nouvelle phase de déploiement au stade pré-exécution comprenant les une ou plusieurs taches d'établissement de réseau spécifiques à l'infrastructure lues à l'étape de lecture ;
la transmission, sur la base de la phase de déploiement au stade pré-exécution du plan de déploiement, des une ou plusieurs tâches d'établissement de réseau spécifiques à l'infrastructure au serveur de gestion en nuage (155) en vue de leur exécution dans l'infrastructure en nuage (150), dans lequel les une ou plusieurs tâches spécifiques à l'infrastructure comprennent des instructions pour la machine virtuelle (160) instanciée dans l'infrastructure en nuage cible (150) pour découvrir et transmettre une adresse IP pour une carte d'interface de réseau virtuelle configurée pour la machine virtuelle (160) ;
la réception, par le serveur de gestion d'application (110), de l'adresse IP découverte et d'une adresse de commande d'accès au support, MAC, pour la carte d'interface réseau virtuelle à partir de la machine virtuelle (160) par l'intermédiaire du serveur de gestion en nuage (155) ;
l'association, par le serveur de gestion d'application (110), des adresses IP et MAC reçues à une machine virtuelle correspondante (160) qui est un composant de l'application en nuage en cours de déploiement ;
la mise à jour, par le serveur de gestion d'applications (110), de la première pluralité de tâches sur la base des adresses réseau reçues, et
la transmission, sur la base des une ou plusieurs phases de déploiement d'exécution du plan de déploiement, de la première pluralité de tâches mises à jour au serveur de gestion en nuage (155) en vue de leur exécution dans l'infrastructure en nuage (150).

2. Procédé selon la revendication 1, comprenant en outre :
la détermination que l'infrastructure en nuage (150) correspond à un premier fournisseur en nuage.

3. Procédé selon la revendication 2,
dans lequel les tâches d'une phase de déploiement au stade amorçage sont transmises au serveur de gestion en nuage (155) avant les tâches d'une phase de déploiement au stade exécution.

4. Procédé selon la revendication 3, comprenant en outre l'étape de transmission d'une seconde pluralité de tâches au serveur de gestion en nuage (155), dans lequel la transmission de la seconde pluralité de tâches au serveur de gestion en nuage (155) comprend :
la transmission des tâches de la phase de déploiement d'amorçage au serveur de gestion en nuage (155) ;
après ladite transmission des tâches de la phase de déploiement au stade amorçage, la transmission des tâches de la nouvelle phase de déploiement au stade pré-exécution au serveur de gestion en nuage (155) ; et
après la transmission des tâches de la nouvelle phase de déploiement au stade pré-exécution, la transmission des tâches de la phase de déploiement au stade exécution au serveur de gestion en nuage (155).

5. Procédé selon la revendication 4, comprenant en outre :
avant la transmission des tâches de la nouvelle phase de déploiement au stade pré-exécution, au serveur de gestion en nuage (155) :
le contrôle des tâches de la phase de déploiement au stade amorçage ; et
la détermination que l'exécution de chacune des tâches de la phase de déploiement au stade amorçage est achevée dans l'infrastructure en nuage (150).

6. Procédé selon la revendication 3, dans lequel les tâches de la phase de déploiement au stade amorçage comprennent une ou plusieurs tâches qui, à leur exécution dans l'infrastructure en nuage (150), instancient une ou plusieurs machines virtuelles (160) dans l'infrastructure en nuage (150).

7. Procédé selon la revendication 3, dans lequel les tâches de la phase de déploiement au stade exécution comprennent une ou plusieurs tâches qui, à leur exécution dans l'infrastructure en nuage (150), entraînent l'installation d'un logiciel sur une ou plusieurs de machines virtuelles (160) instanciées dans l'infrastructure en nuage (150).

8. Support non transitoire lisible par ordinateur comprenant des instructions exécutables par un ou plusieurs hôtes dans un environnement infonuagique, les instructions, à leur exécution, amenant les un ou plusieurs hôtes à réaliser un procédé de déploiement d'une application en nuage selon l'une quelconque des revendications 1 à 7.

9. Système infonuagique virtualisé, comprenant :
un ou plusieurs ordinateurs hôtes qui mettent en œuvre une plate-forme de déploiement en nuage sur laquelle sont exécutés des premier et second modules ;
une pluralité d'ordinateurs hôtes exécutés dans une infrastructure en nuage (150) ; et
un serveur de gestion en nuage (155) dans l'infrastructure en nuage (150), et
un hôte de gestion (100) configuré avec une interface utilisateur (105, 200, 300), dans lequel le système est configuré pour réaliser un procédé de déploiement d'une application en nuage, le procédé étant tel que présenté aux revendications 1 à 7.
